(19) Europäisches Patentamt / European Patent Office / Office européen des brevets

(11) **EP 4 134 248 B1**

(12) **EUROPEAN PATENT SPECIFICATION**

(45) Date of publication and mention
of the grant of the patent:
**06.05.2026 Bulletin 2026/19**

(21) Application number: **22187248.4**

(22) Date of filing: **27.07.2022**

(51) International Patent Classification (IPC):
**B60C 11/00** *(2006.01)*      **B60C 11/03** *(2006.01)*

(52) Cooperative Patent Classification (CPC):
**B60C 11/005;** B60C 11/0304; B60C 11/0306;
B60C 19/002; B60C 2011/0025; B60C 2011/0355;
B60C 2011/0388; Y02T 10/86

(54) **TIRE**

REIFEN

PNEUMATIQUE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **11.08.2021 JP 2021131170**

(43) Date of publication of application:
**15.02.2023 Bulletin 2023/07**

(73) Proprietor: **Sumitomo Rubber Industries, Ltd.
Kobe-shi, Hyogo 651-0072 (JP)**

(72) Inventor: **FUJII, Daichi
Hyogo 651-0072 (JP)**

(74) Representative: **Manitz Finsterwald
Patent- und Rechtsanwaltspartnerschaft mbB
Martin-Greif-Straße 1
80336 München (DE)**

(56) References cited:
EP-A1- 1 630 003    EP-A1- 3 141 402
EP-A1- 3 950 381    JP-A- 2008 050 408

**Description**

TECHNICAL FIELD

The present invention relates to a tire.

BACKGROUND OF THE INVENTION

For example, a method of making a two-layer structure of a tread rubber of a pneumatic tire and using a foamed rubber for a rubber layer inside the two-layer structure is known as a method of suppressing a vibrating sound (noise) from a tire during running (JP H06-156016 A).

Moreover, recently, steering stability particularly during high-speed running has been strongly demanded in the tire market.

EP 3 141 402 A1 discloses a tyre with a reinforcement layer and a tread portion comprising an inner base layer, an outer base layer and a cap layer, so as to improve rolling resistance of the tyre while maintaining ice/snow performance and steering stability of the tyre.

SUMMARY OF THE INVENTION

An object of the present invention is to provide a tire having improved total performance of steering stability during high-speed running and noise performance.

As a result of intensive studies, it has been found that the above-described problem is solved by stacking two or more rubber layers on a tread part of a tire and making complex elastic modulus and groove depths of circumferential grooves of the rubber layers have a predetermined relationship.

That is, the present invention relates to a tire according to claim 1.

According to the present invention, a tire having improved total performance of steering stability during high-speed running and noise performance is provided.

BRIEF DESCRIPTION OF THE DRAWINGS

FIG. 1 is a cross-sectional view of one example of a tire that is one embodiment of the present disclosure.

FIG. 2 is a schematic view of a grounding surface of a tire when a tread is pressed against a flat surface.

FIG. 3 is a schematic view of a grounding surface of a tire that is another embodiment.

FIG. 4 is a schematic view of a grounding surface of a tire that is another embodiment.

FIG. 5 is an enlarged cross-sectional view illustrating a part of a tread of a tire according to one embodiment of the present invention.

FIG. 6 is an enlarged cross-sectional view illustrating a part of a tread of a tire according to one embodiment of the present invention.

DETAILED DESCRIPTION

The tire according to the present invention is a tire comprising a tread part, the tread part comprising at least a first rubber layer forming a tread surface and a second rubber layer adjacent to an inner side of the first rubber layer in a tire radial direction,

wherein the tread part comprises

two or more circumferential grooves extending continuously in a tire circumferential direction,
a pair of shoulder land parts partitioned by the circumferential grooves and grounding ends, and
a center land part located between the pair of the shoulder land parts,

wherein the first rubber layer and the second rubber layer are formed of a rubber composition comprising a rubber component,
wherein a ratio of a distance $H_2$ (mm) from an outermost surface of the tread part to an outermost part of the second rubber layer to a groove depth $H_1$ of deepest parts of the circumferential grooves ($H_2/H_1$) is 0.40 to 0.90, and
wherein, when a complex elastic modulus at 30°C of the first rubber layer is defined as $E^*_T$ (MPa) and a complex elastic modulus at 30°C of the second rubber layer is defined as $E^*_B$ (MPa), $E^*_B$ is greater than $E^*_T$, and a ratio of $E^*_T$ to $H_2/H_1$ ($E^*_T/(H_2/H_1)$) is 6.0 or more.

The tire obtained is improved in total performance of steering stability during high-speed running and noise performance by stacking two or more rubber layers on a tread part of the tire and making complex elastic modulus and groove depths of circumferential grooves of the rubber layers have a predetermined relationship. The reason for that is considered as follows, although the following consideration is not intended to be bound by any theory.

In the case that an entire tread land part is soft, the tread land part inevitably collapses at an exit during a cornering motion, transmission of force becomes poor during acceleration, and acceleration does not become smooth when an accelerator is pushed. On the other hand, in the case that the entire tread land part is hard, although a deformation of the tread land returns smoothly, vibrations easily propagate and noise performance deteriorates.

The tire has the following features: (1) in order to form interfaces in a land part, the land part is divided into two or more (preferably three or more) rubber layers, the second rubber layer is formed to be harder than the first rubber layer, and a ratio of a distance $H_2$ (mm) from an outermost surface of the tread part to an outermost part of the second rubber layer to a groove depth $H_1$ of deepest parts of the circumferential grooves ($H_2/H_1$) is set to be in a predetermined range, thereby making it possible to absorb vibrations inside the first rubber layer and to simultaneously produce a large force from the second rubber layer at an exit of a corner to transmit the force to the land part, so that the deformation of the tread land can return stably rise at the exit of the corner; and (2) the first rubber layer is formed such that a complex elastic modulus ($E^*_T$) of the first rubber layer at 30°C also increases with an increase in $H_2/H_1$, thereby making it possible to suppress collapsing of the first rubber layer, and also, when $H_2/H_1$ is low, a distance through which vibrations propagate from a road surface to the second rubber layer becomes short, though it can be expected that the vibrations are absorbed in the first rubber layer by making the first rubber layer soft. Additionally, it is considered that, with cooperation of these features, a notable effect of improving the total performance of steering stability during high-speed running and noise performance is achieved.

The rubber composition forming the first and second rubber layers each comprises a filler comprising silica, and a content of silica in the filler is preferably 50% by mass or more.

By setting the content of silica in the filler to be 50% by mass or more in the rubber composition forming the first and second rubber layers, a loss tangent tan $\delta$ of the rubber composition can be decreased, and a phase difference between an input and a response can be decreased, so that it is considered that smooth acceleration is easily achieved at the exit of the corner.

The tire of the present disclosure preferably comprises, on a tire inner circumferential surface of the tread part, one or more low-density members selected from the group consisting of a sealant layer, a noise suppressing body, and a three-dimensional network structure.

By providing the one or more low-density members on the tire inner circumferential surface, vibrations in the tread part can be cancelled with these low-density members vibrating inside the tire when the vibrations propagate from the tread surface, so that it is considered that effects of the present disclosure can be expected to be exhibited.

In the tire of the present disclosure, an amount of a polymer in the rubber composition forming the first rubber layer is preferably 40% by mass or less, and the amount of the polymer in the rubber composition forming the first rubber layer is preferably greater than an amount of a polymer in the rubber composition forming the second rubber layer.

It is considered that, by setting the amount of the polymer in the rubber composition forming the first rubber layer to be 40% by mass or less and to be greater than the amount of the polymer in the rubber composition forming the second rubber layer, transmission of force from a polymer chain of the second rubber layer to the first rubber layer can be facilitated while suppressing transmission of vibrations of the polymer in the first rubber layer.

In the tire of the present disclosure, a ratio of an area of the land part in a grounding surface is preferably 60 to 80%.

By setting the ratio of the area of the land part in the grounding surface to be in the above-described range, force can be transmitted throughout the tread during a cornering motion, and parts locally receiving vibrations from a road surface can be decreased, so that it is considered that the noise performance becomes easily improved.

In the tire of the present invention, the ratio of the area of the land part in the grounding surface is asymmetric with respect to a tire equatorial plane.

Alternatively, the tire of the present invention, the circumferential grooves are not present on the tire equatorial plane, and a distance from the tire equatorial plane to groove edges of the circumferential grooves nearest to an inner direction of a vehicle is different from a distance from the tire equatorial plane to groove edges of the circumferential grooves nearest to an outer direction of the vehicle.

In the tire of the present disclosure, a ratio of groove areas in the shoulder land parts is preferably greater than a ratio of a groove area in the center land part.

By setting the ratio of the groove areas in the shoulder land parts to be greater than the ratio of the groove area in the center land part, the shoulder land parts become easily deformed during the cornering motion, and force can be easily generated from the shoulder land parts. Moreover, increase of local input can be suppressed in the center land part that comes into contact with the ground during a rolling motion, and it is considered that the noise performance can also be easily improved.

In the tire of the present disclosure, a length of at least one land part in a width direction preferably increases gradually from an outside toward an inside in a tire radial direction. Moreover, in the tire of the present disclosure, when a groove width on the tread surface of the circumferential groove located on the outermost side when mounted on a vehicle is defined as $L_0$, and a groove width at 95% of the deepest part of the groove bottom of the circumferential groove located on the outermost side when mounted on the vehicle is defined as $L_{95}$, $L_{95}/L_0$ is preferably 0.20 to 0.80.

By making the length of the at least one land part in the width direction to increase gradually from the outside toward the inside in the tire radial direction (preferably, setting the $L_{95}/L_0$ to be 0.20 to 0.80), a plurality of rubber layers become easily formed uniformly on lateral surfaces of the land parts in producing the tire, so that it is considered that deterioration in noise performance becomes easily suppressed.

The complex elastic modulus $E^*_T$ of the first rubber layer at 30°C is preferably 4.0 MPa or more.

It is considered that, by setting the $E^*_T$ to be in the above-described range, force transmitted from the second rubber layer becomes easy to be transmitted to the road surface.

A tan $\delta$ of the second rubber layer at 30°C is preferably 0.25 or less.

By setting the tan $\delta$ of the second rubber layer at 30°C to be in the above-described range, a phase difference between an input and a response can be decreased, so that it is considered that it becomes easy to achieve smooth acceleration at the exit of the corner.

A glass transition temperature of the first rubber layer is preferably -25°C or more.

By setting the glass transition temperature of the first rubber layer to be in the above-described range, energy loss corresponding to a frequency of a vibration generated at a rolling motion during normal running can be increased, so that It is considered that absorption of the vibration can be facilitated.

A Shore hardness (Hs) of the second rubber layer measured at 23°C in accordance with JIS K 6253-3:2012 using a type-A durometer is preferably 50 to 80.

It is considered that, by setting the Shore hardness (Hs) of the second rubber layer o be in the above-described range, a good followability in macro becomes easy to be obtained.

A modulus of the second rubber layer at 100% elongation is preferably greater than a modulus of the first rubber layer at 100% elongation of the first rubber layer.

By setting the modulus of the second rubber layer at 100% elongation to be greater than the modulus of the first rubber layer at 100% elongation, it becomes possible to easily generate a great force in the second rubber layer, so that it is considered that thereby the steering stability during high-speed running is improved.

<Definition>

A "standardized rim" is a rim defined for each tire in a standard system including a standard, on which the tire is based, by the standard, for example, a "standard rim" in JATMA, "Design Rim" in TRA, or "Measuring Rim" in ETRTO. Besides, in a case of a tire whose size is not defined in the above-described standard system, the "standardized rim" is regarded as a rim that can be rim-assembled to such a tire and that has the narrowest width among rims having a minimum diameter and not causing air leakage between the rims and the tire.

A "standardized internal pressure" is an air pressure defined for each tire in a standard system including a standard, on which the tire is based, by the standard, for example, a "MAXIMUM AIR PRESSURE" in JATMA, a maximum value described in the table "TIRE LOAD LIMITS AT VARIOUS COLD INFLATION PRESSURES" in TRA, or "INFLATION PRESSURE" in ETRTO. Besides, in a case of a tire whose size is not defined in the above-described standard system, the standardized internal pressure is regarded as being 250 kPa.

A "standardized state" is a state in which the tire is rim-assembled to a standardized rim, filled with a standardized internal pressure, and applied with no load. Besides, in a case of a tire whose size is not defined in the above-described standard system, the standardized state is regarded as a state in which the tire is rim-assembled to the rim having the minimum diameter, filled with a pressure of 250 kPa, and applied with no load. In the present specification, unless otherwise noted, dimensions (such as a cross-sectional width Wt of the tire) of each part of the tire are measured in the standardized state.

A "standardized load" is a load defined for each tire in a standard system including a standard, on which the tire is based, by the standard, for example, a "MAXIMUN LOAD CAPACITY" in JATMA, a maximum value described in the table "TIRE LOAD LIMITS AT VARIOUS COLD INFLATION PRESSURES" in TRA, or "LOAD CAPACITY" in ETRTO.

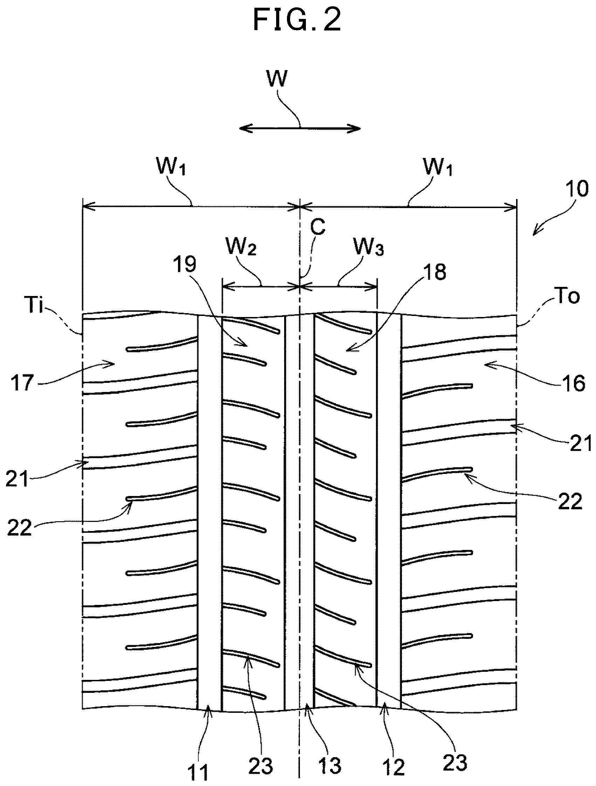

A "tread grounding end" is a grounding position on an outermost side in a tire width direction (a horizontal direction in FIG. 2) when a standardized load is applied to the tire in a standardized state and the tire comes into contact with a flat surface at a camber angle of 0°. A tread end Ti denotes a tread end located inside a vehicle when the tire is mounted to the vehicle, and a tread end To denotes a tread end located outside the vehicle.

"Land parts" refer to areas partitioned, in the tread part, by the tread grounding ends and a plurality of circumferential grooves extending continuously in a tire circumferential direction. For example, in the case that the number of the circumferential grooves is two, the land parts are divided into a pair of shoulder land parts and a center land part sandwiched between the shoulder land parts, and in the case that the number of the circumferential grooves is three, the center land part is further divided into: a land part located inside the vehicle when the tire is mounted to the vehicle; and a land part located on outside the vehicle.

"Grooves" including the circumferential grooves and a lateral groove refer to depressions each having a width larger than at least 2.0 mm. On the other hand, in the present specification, a "sipe" refers to a narrow notch having a width of 2.0 mm or less, preferably 0.5 to 2.0 mm.

A "total area S of a grounding surface" is a total area in a state in which all the grooves are filled in a grounding shape obtained when, in a standardized state, a standardized load is applied to the tire and the tread is pressed against a flat surface at a camber angle of 0°. The "ratio of an area of a land part in a grounding surface" refers to a ratio of a total area of the shoulder lands and the center land to the total area S of the grounding surface.

The "ratio of groove areas in the shoulder land parts" refers to a total area of the lateral groove and/or the sipe traversing the shoulder land parts to a total area of the shoulder land parts. The "ratio of groove areas in the center land part" refers to the total area of the lateral groove and/or the sipe traversing the center land part to the total area of the center land part.

An "area $S_1$ of a land part in a direction from a tire equatorial plane to the inside of the vehicle" and an "area $S_2$ of the land part in a direction from the tire equatorial plane to the outside of the vehicle" refer to a sum of areas of land parts present on an inner direction of the vehicle with respect to the tire equatorial plane and a sum of areas of land parts present on an outer direction of the vehicle with respect to the tire equatorial plane, respectively, when the tire is mounted to the vehicle.

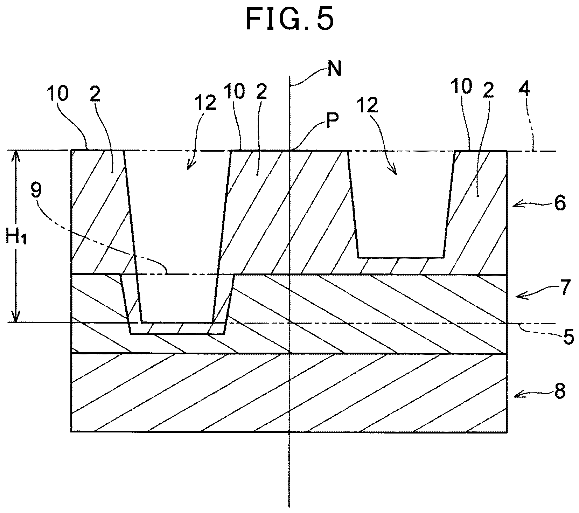

The "groove depth $H_1$ of circumferential grooves" is calculated by a distance between the tread surface and an extension line of a deepest part of a groove bottom of a circumferential groove. Besides, for example, in the case that a plurality of circumferential grooves 2 are provided, the groove depth $H_1$ is a distance between a tread surface 10 and an extension line of a deepest part of a groove bottom of a circumferential groove 2 that has the deepest groove depth among the plurality of circumferential grooves 2 (a circumferential groove 2 on the left side in FIG. 5).

The "distance $H_2$ from an outermost surface of the tread part to an outermost part of the second rubber layer" refers to: a linear distance, on a cross-section in a tire radial direction, from the outermost surface of the tread part on a tire equatorial plane C to the outermost part of the second rubber layer, in the case that any circumferential grooves are not provided on the tire equatorial plane C; and a linear distance, on the cross-section in the tire radial direction, between an outermost surface of the tread part in the center of a land part nearest to the tire equatorial plane in the tire width direction to the outermost part of the second rubber layer, in the case that a circumferential groove is provided on the tire equatorial plane C. The "land part nearest to the tire equatorial plane" refers to a land part having a groove edge nearest to the tire equatorial plane C among groove edges of circumferential grooves present on the tire equatorial plane C.

A "content of oil" also comprises an amount of oil contained in an oil-extended rubber.

<Measuring method>

The "total area S of the grounding surface", the "total area of the shoulder land parts", the "total area of the center land part", and the "total area of the lateral groove and/or sipe" traversing these land parts are values calculated based on the grounding shape. The grounding shape is obtained, for example, by applying an ink to a tread part 1, applying standardized load to the tread part 1 to vertically press the tread part 1 against a cardboard or the like, and transferring the ink applied to the tread part 1, after mounting a standardized rim to a tire and keeping the standardized pressure. Moreover, from the obtained grounding shape, the sum of the areas of the shoulder land parts in a state, in which all of the lateral groove and the sipe traversing the shoulder land parts are filled, is defined as the total area of the shoulder land parts, and the sum of the area of the center land part in a state, in which all of the lateral groove and the sipe traversing the center land part are filled, is defined as the total area of the center land part.

The "area $S_1$ of the land part in a direction from a tire equatorial plane to the inside of the vehicle" and the "area $S_2$ of the land part in a direction from a tire equatorial plane to the outside of the vehicle" are calculated by summing the areas of land parts present in the inner direction of the vehicle with respect to the tire equatorial plane when the tire is mounted to the vehicle and by summing the areas of land parts present in the outer direction of the vehicle with respect to the tire equatorial plane when the tire is mounted on the vehicle, respectively, after dividing the grounding shape with respect to the tire equatorial plane. Besides, the areas of land parts are calculated by the grounding shape in the state in which all of the lateral groove and the sipe traversing these land parts are filled.

The "ratio of the areas of the land parts in the grounding surface" is calculated by a ratio of the total area of the shoulder land parts and the center land part to the total area S of the grounding surface, for example, it is calculated by $(S_1 + S_2) / S$.

The "30°CE*" is a complex elastic modulus (MPa) measured under a condition of a temperature at 30°C, a frequency of 10 Hz, an initial strain of 5%, and a dynamic strain of 1%. A sample for measurement of the complex elastic modulus is a vulcanized rubber composition having a length of 20 mm, a width of 4 mm, and a thickness of 1 mm. In the case that the sample is prepared by being cut out of the tire, the sample is cut out of the tread part of the tire such that the tire circumferential direction matches a long side direction and the tire radial direction matches a thickness direction.

A "30°C tan $\delta$" is a loss tangent measured under a condition of a temperature at 30°C, a frequency of 10 Hz, an initial strain of 5%, and a dynamic strain of 1%. A sample for measurement of the loss tangent is prepared in the similar manner as in the case of the 30°CE*.

A "glass transition temperature (Tg) of a rubber layer" is determined as a temperature (tan $\delta$ peak temperature) corresponding to the highest value of tan $\delta$ in an obtained temperature distribution curve by measuring the temperature distribution curve of tan $\delta$ using EPLEXOR Series manufactured by gabo Systemtechnik GmbH under a condition of a frequency of 10Hz, an initial strain of 10%, an amplitude of $\pm$ 0.5%, and a temperature rising rate of 2°C/min. A sample for measurement of Tg is prepared in the similar manner as in the case of the 30°CE*.

The "Shore hardness" is a Shore hardness (Hs) measured in accordance with JIS K 6253-3:2012 using a type-A durometer under a condition of a temperature at 23°C. A sample for measurement of the Shore hardness is prepared by being cut out of the tread part such that the tire radial direction matches the thickness direction. Moreover, the measurement is performed in such a manner that a measuring instrument is pressed against the sample for measurement of the hardness from a grounding surface-side of the sample for measurement of the hardness.

The "modulus at 100% elongation" is a tensile stress at 100% elongation in a grain direction (a rolling direction in forming a rubber sheet by extrusion or shearing process), the tensile stress being measured in accordance with JIS K 6251:2017 under an atmosphere at 23°C under a condition of a tension rate of 3.3 mm/second. A sample for measurement of the modulus at 100% elongation is a No 7. dumbbell vulcanized rubber specimen having a thickness of 1 mm. In the case that the sample is prepared by being cut out of the tire, the sample is cut out of the tread part of the tire in such a manner that the tire circumferential direction matches a tensile direction and the tire radial direction matches the thickness direction.

The "amount of polymer (% by mass)" in the rubber composition expresses a ratio of a total mass of rubber components in the rubber composition to a total mass of the rubber composition and is calculated by the following method. A vulcanized rubber specimen is immersed in acetone for 24 hours in accordance with JIS K 6229:2015, thereby extracting an acetone-soluble component. Then, heating and drying are performed, thereby removing the solvent in the specimen, and a mass of the vulcanized rubber specimen after the extraction of the acetone-soluble component is measured. Next, this vulcanized rubber specimen is pyrolyzed by increasing the temperature at 10°C/min from the room temperature to 750°C in a nitrogen stream by a thermogravimetry in accordance with JIS K 6226-1:2003, and a mass of the sample after the pyrolysis is measured. The "amount of polymer (% by mass)" in the rubber composition can be calculated by a difference between a mass of the vulcanized rubber specimen after the extraction of the acetone-soluble component and a mass of the sample after the pyrolysis when the vulcanized rubber specimen before the extraction of acetone is regarded as being 100% by mass.

A "styrene content" is a value calculated by $^1$H-NMR measurement and is applied to a rubber component having repeat units originating from styrene such as, for example, a SBR. A "vinyl content (1,2-bond butadiene unit amount)" is a value calculated in accordance with JIS K 6239-2:2017 by an infrared absorption spectrum analysis and is applied to a rubber component having repeat units originating from butadiene such as, for example, a SBR and a BR. A "cis content (cis-1,4-bond butadiene unit amount)" is a value calculated in accordance with JIS K 6239-2:2017 by an infrared absorption spectrum analysis and is applied to a rubber component having repeat units originating from butadiene such as, for example, a BR.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). For example, the Mw is applied to, for example, a SBR, a BR, or the like.

A "$N_2SA$ of carbon black" is measured in accordance with JIS K 6217-2:2017. A "$N_2SA$ of silica" is measured in accordance with ASTM D3037-93 by a BET method.

A procedure for producing a tire that is one embodiment of the present disclosure is described below in detail. However, the following descriptions are illustrative for explaining the present disclosure, and are not intended to limit the technical scope of the present disclosure to this description range only. Besides, in the present specification, a numerical range identified with "to" means to include the numerical values of both ends.

[Tire]

A tire of one embodiment of the present disclosure is described below with reference to the drawings. Besides, the embodiment described below is merely one example, and the tire of the present disclosure is not limited to the embodiment described below.

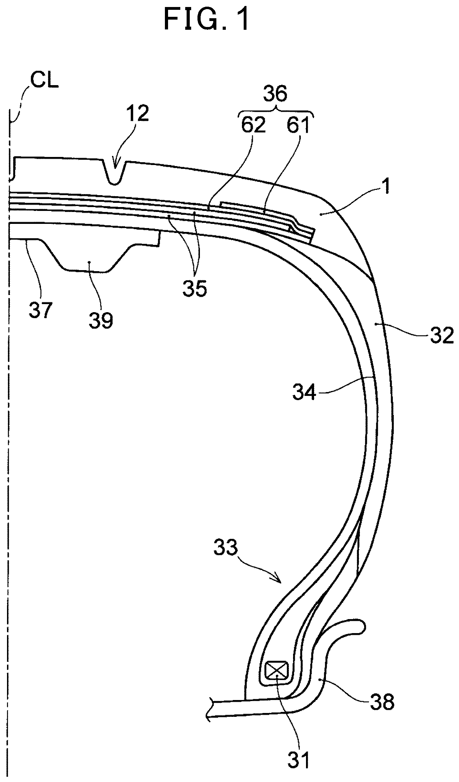

FIG. 1 is a cross-sectional view of a tire in a plane passing through a tire rotation axis and illustrates only a right-side part of the tire obtained by dividing the tire by a tire centerline CL. The tire of FIG. 1 comprises a tread part 1, a sidewall 32, a bead part 33, a carcass 34, a belt 35, and a band 36. The tread part 1 is formed of two or more rubber layers comprising a first layer 6 forming a tread surface. The bead part 33 comprises a bead core 31. The carcass 34 may comprise a carcass cord (not shown). The belt 35 may include a belt cord (not shown). The band 36 includes an edge band 61 covering only edge part of the belt 35 and a full band 62 covering the whole area of the belt 35. Both the edge band 61 and the full band 62 may include a band cord (not shown). Besides, an illustration of each rubber layer in the tread part 1 is omitted in FIG. 1.

FIG. 2 is a schematic view of a grounding surface of the tire when the tread part 1 is pressed against a flat surface. A tread pattern for which a direction of mounting to a vehicle is designated is formed on the tread part 1. The tread pattern of the tread part 1 is formed in a shape asymmetric with respect to a tire equator C.

The tread part 1 has an outer tread end To and an inner tread end Ti. The outer tread end To is located outside the vehicle (on the right side in FIG. 2) when the tire is mounted to the vehicle. The inner tread end Ti is located inside the vehicle (on the left side in FIG. 2) when the tire is mounted to the vehicle.

The tread part 1 has a plurality of circumferential grooves 11, 12, and 13 extending continuously in a circumferential direction C. In FIG. 2, three circumferential grooves 11, 12, and 13 are provided. However, the number of the circumferential grooves is not particularly limited and may be, for example, two to five. Moreover, although the circumferential grooves 11, 12, and 13 linearly extends along the circumferential direction C in the present embodiment, these circumferential grooves are not limited to such an aspect and may extend along the circumferential direction C, for example, in a wavy, sinusoidal, or zigzag shape, etc.

The "shoulder land parts" in the present disclosure refer to a pair of land parts formed between a circumferential groove located on the outermost side in a width direction W from the tire equator C and each of the tread ends To and Ti. In FIG. 2, an outer shoulder land part 16 is provided which is formed between a circumferential groove 12 located on the outermost side when the tire is mounted to the vehicle and the outer tread end To, and an inner shoulder land part 17 is provided which is formed between a circumferential groove 11 located on the innermost side when the tire is mounted to the vehicle and the inner tread end Ti.

The "center land part" in the present disclosure refers to all land parts located between the pair of the shoulder land parts. In FIG. 2, an outer center land part 18 is provided which is formed between a circumferential groove 13 provided along the tire equator C and the circumferential groove 12 located on the outermost side when the tire is mounted to the vehicle, and an inner center land part 19 is provided which is formed between the circumferential groove 13 provided along the tire equator C and a circumferential groove 11 located on the innermost side when the tire is mounted to the vehicle. However, the number of the center land parts is not particularly limited and may be, for example, one to five.

The shoulder land parts 16 and 17 and the center land parts 18 and 19 of the present disclosure are each provided with a lateral groove and/or a sipe traversing these land parts. In FIG. 2, the shoulder land parts 16 and 17 are each provided with a plurality of shoulder lateral grooves 21, each terminal of which opens to the circumferential groove 11 or 12 and a plurality of shoulder sipes 22, each one end of which opens to the circumferential groove 11 or 12, and the center land parts 18 and 19 are each provided with a plurality of center sipes 23, each one end of which opens to the circumferential groove 11 or 13.

From the viewpoint of noise performance, the ratio of groove areas in the shoulder land parts is preferably greater than the ratio of a groove area in the center land part. The ratio of groove areas in the shoulder land parts is preferably 5 to 50%, more preferably 20 to 45%, further preferably 25 to 40%. The ratio of the groove area in the center land part is preferably 10 to 45%, more preferably, 15 to 40%, further preferably 20 to 35%.

The ratio of the areas of the land parts in the grounding surface is preferably 60 to 80%, more preferably 63 to 77%, further preferably 65 to 75%.

The ratio of the areas of the land parts in the grounding surface is asymmetric with respect to the tire equatorial plane. The area $S_1$ of the land part in a direction from the tire equatorial plane to the inside of the vehicle is less than the area $S_2$ of the land part in the direction from the tire equatorial plane to the outside of the vehicle. When the $S_1$ is less than the $S_2$, the rigidity of the tire on the outside of the vehicle becomes higher than that of the tire on the inside of the vehicle and a ratio of a cornering force of a rear tire to a cornering force of a front tire (CF ratio) is increased, so that it is considered that linearity is improved and steering stability is improved. A ratio of the area $S_1$ of the land part in the direction from the tire equatorial plane to the inside of the vehicle to the total area S of the grounding surface ($S_1$/S) is preferably 0.30 to 0.40, more preferably 0.32 to 0.38. A ratio of the area $S_2$ of the land part in the direction from the tire equatorial plane to the outside of the vehicle to the total area S of the grounding surface ($S_2$/S) is preferably 0.30 to 0.40, more preferably 0.32 to 0.38.

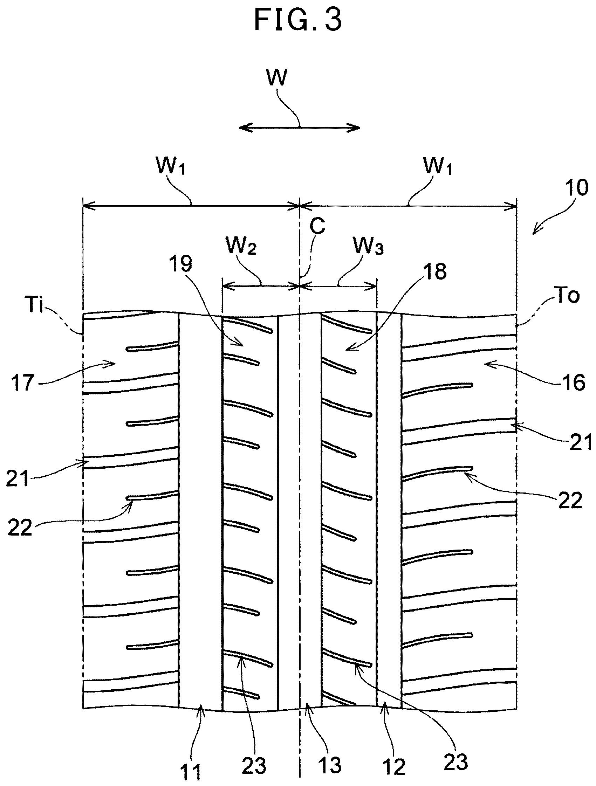

Fig. 3 is a schematic view of a grounding surface of the tire that is another embodiment. In FIG. 3, the three circumferential grooves 11, 12, and 13 extending continuously in the circumferential direction C are provided. Moreover, the groove width of the circumferential groove 11 provided in an inner direction of the vehicle with respect to the tire equatorial plane is wider than the groove width of the circumferential groove 12 provided in an outer direction of the vehicle with respect to the tire equatorial plane, and the area $S_1$ of the land part in a direction from the tire equatorial plane to the inside of the vehicle becomes less than the area $S_2$ of the land part in the direction from the tire equatorial plane to the outside of the vehicle. The shoulder land parts 16 and 17 are each provided with a plurality of shoulder lateral grooves 21, each terminal of which opens to the circumferential groove 11 or 12 and a plurality of shoulder sipes 22, each one end of which opens to the circumferential groove 11 or 12, and the center land parts 18 and 19 are each provided with a plurality of center sipes 23, each one end of which opens to the circumferential groove 11 or 13.

In the tire of the present invention, it is further preferable that none of the circumferential grooves are present on the tire equatorial plane, and the distance from the tire equatorial plane to the groove edge of the circumferential groove located nearest to the inside of the vehicle is preferably different from the distance from the tire equatorial plane to the groove edge of the circumferential groove located nearest to the outside of the vehicle. The distance $W_2$ from the tire equatorial plane to the groove edge of the circumferential groove located nearest to the inside of the vehicle is preferably larger than the distance $W_3$ from the tire equatorial plane to the groove edge of the circumferential groove located nearest to the outside of the vehicle. When the $W_2$ is larger than the $W_3$, the rigidity of the tire on the outside of the vehicle can be increased, and the tire can come into contact with the ground with the tread part being deformed around the inner side of the vehicle when a centrifugal force is applied to the vehicle during a cornering motion, so that it is considered that it an efficient transmission of force to a road surface is facilitated. A ratio of the distance $W_2$ from the tire equatorial plane to the groove edge of the circumferential groove located nearest to the inside of the vehicle to the distance $W_1$ from the tire equatorial plane to a tread grounding end ($W_2/W_1$) is preferably 0.07 to 0.30, more preferably 0.09 to 0.25, further preferably 0.10 to 0.20, particularly preferably 0.12 to 0.20. A ratio of the distance $W_3$ from the tire equatorial plane to the groove edge of the circumferential groove located nearest to the outside of the vehicle to the distance $W_1$ from the tire equatorial plane to a tread grounding end ($W_3/W_1$) is preferably 0.05 to 0.25, more preferably 0.08 to 0.22, further preferably 0.10 to 0.20, particularly preferably 0.10 to 0.18.

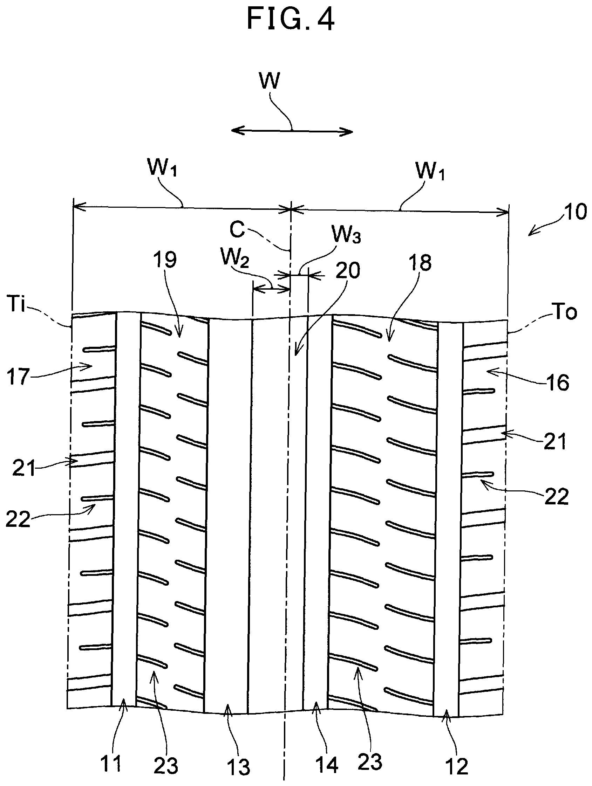

FIG. 4 is a schematic view of a grounding surface of a tire that is another embodiment. In FIG. 4, four circumferential grooves 11, 12, 13, and 14 extending continuously in the circumferential direction C are provided, and no circumferential groove are present on the tire equatorial plane. Moreover, the distance $W_2$ from the tire equatorial plane to the groove edge of the circumferential groove 13 located nearest to the inside of the vehicle becomes larger than the distance $W_3$ from the tire equatorial plane to the groove edge of the circumferential groove 14 located nearest to the outside of the vehicle. Furthermore, the groove width of the circumferential groove 13 is wider than those of the other circumferential grooves 11, 12, and 14, and the area $S_1$ of the land part in a direction from the tire equatorial plane to the inside of the vehicle becomes less than the area $S_2$ of the land part in the direction from the tire equatorial plane to the outside of the vehicle. The shoulder land parts 16 and 17 are each provided with a plurality of shoulder lateral grooves 21, each terminal of which opens to the circumferential groove 11 or 12 and a plurality of shoulder sipes 22, each one end of which opens to the circumferential groove 11 or 12, and the outer center land part 18 and the inner center land part 19 are each provided with a plurality of center sipes 23, each one end of which opens to the circumferential groove 11, 12, 13, or 14. Besides, although the center land part 20 present on the tire equatorial plane is formed, in FIG. 4, as a plain rib that is not provided with any lateral groove or sipe, the present disclosure is not limited to such an aspect.

<Low-density member>

In the tire of the present disclosure, a low-density member can be provided on a tire inner circumferential surface of the tread part. The low-density member is not particularly limited as long as it has an effect of canceling out vibrations propagating to the tire inner circumferential surface by resonance. Examples of such a low-density member include, for example, a sealant layer, a noise suppressing body, and a three-dimensional network structure that are used for prevention of puncture.

The low-density member can exert its effects by being arranged t on the tire inner circumferential surface of the tread part. Although the thickness of the low-density member in the tire radial direction and the width of the low-density member in a rotational axial direction of the tire, or the volume or the cross-sectional area and the other properties of the low-density member can vary depending on types of the low-density member or the like, a person skilled in the art can appropriately determine them.

The low-density member can be used alone, or two or more thereof can be used in combination. Examples of such combination include, but not limited to, for example, combination made by first disposing a sealant layer on the tire inner circumferential surface of the tread part and further disposing, on the sealant layer, a noise suppressing body, a three-dimensional network structure, or the like.

(Sealant layer)

As the sealant layer, those used for the tire inner circumferential surface of the tread part generally for preventing puncture can be appropriately used. Specific examples of such a sealant layer include, for example, one described in JP 2020-23152 A. The thickness of the sealant layer is usually preferably 1 to 10 mm. The width of the sealant layer is usually preferably 85 to 115%, preferably 95 to 105%, of the maximum width of a belt layer.

(Noise suppressing body)

As the noise suppressing body, any noise suppressing body that can exert a noise suppressing effect in an inner cavity of the tire can be appropriately used. Specific examples of such a noise suppressing body include, for example, one described in JP 2019-142503 A. The noise suppressing body is formed of, for example, a porous sponge material. The sponge material is a spongiform porous structure, and examples of the sponge material include, for example, a so-called sponge itself having open cells, which is obtained by foaming a rubber or a synthetic resin, and web-like one obtained by intertwining animal fibers, plant fibers, synthetic fibers, or the like to integrally couple these fibers to each other. Moreover, examples of the "porous structure" include one having not only open cells but also closed cells. Examples of the noise suppressing body include an open-cell sponge material formed of polyurethane. As the sponge material, for example, a synthetic resin sponge such as an ether-based polyurethane sponge, an ester-based polyurethane sponge, and a polyethylene sponge, and a rubber sponge such as a chloroprene rubber sponge (CR sponge), an ethylene-propylene rubber sponge (EDPM sponge), and a nitrile rubber sponge (NBR sponge) can be appropriately used, and among them, a polyurethane-based sponge including an ether-based polyurethane sponge, a polyethylene-based sponge, and the like are preferable from the viewpoints of noise-suppressing performance, lightness, adjustability of foam, durability, and the like.

A noise suppressing body 9 forms a long band shape having a bottom surface firmly fixed to an inner cavity surface of the tread part, and extends in the tire circumferential direction. In this case, the noise suppressing body can be formed into an approximately annular shape by making outer end parts in the circumferential direction to face each other, or the outer edge parts may be separated from each other in the circumferential direction. The noise suppressing body 9 has substantially the same cross-sectional shape at each position in the circumferential direction other than the outer edge parts. As this cross-sectional shape, a horizontally long flat shape having a height smaller than a width in the tire axial direction for the purpose of preventing fall or deformation during running is preferable. Particularly, when a concave groove 7 extending continuously in the circumferential direction is provided on the inner-surface side in the radial direction, the surface area of the noise suppressing body is increased, allowing for more resonance energy to be absorbed, and a heat dissipation property is improved, allowing for suppression of increase in temperature of the sponge material.

The glass transition temperature (Tg) of the noise suppressing body is preferably -55°C to -45°C from the viewpoint of well keeping durability and flexibility. When the flexibility of the noise suppressing body is kept under a low temperature, the noise suppressing body effectively converts vibration energy of air into thermal energy, for example, even during running in cold environments, and running noise is sufficiently reduced. In the present specification, the Tg is a value measured using a differential scanning calorimeter SC Q2000 manufactured by TA Instruments in accordance with ASTM D 6604 (release date: 2013).

The density of the noise suppressing body is preferably $1.0 \times 10^{-2}$ g/cm$^3$ to $4.0 \times 10^{-2}$ g/cm$^3$ from the viewpoint of reduction in running noise of around 250 Hz without causing an increase in tire weight.

The volume of the noise suppressing body is desirably 0.4 to 30% of the total volume of the inner cavity of the tire from the viewpoint of sufficient conversion of vibration energy of air or the like. The volume of the noise suppressing body means an apparent total volume of the noise suppressing body, the apparent total volume being determined from a contour including inner air bubbles. In the present specification, the total volume V of the inner cavity of the tire is to be approximately calculated, by the following equation, in a standardized state in which a pneumatic tire is rim-assembled to a standardized rim and is filled with a standardized internal pressure.

$$V = A \times \{(Di - Dr) / 2 + Dr\} \times \pi$$

wherein, "A" denotes a lateral cross-sectional area of the inner cavity of the tire obtained by performing a CT scan on the above-described tire-rim assembly in the standardized state, "Di" denotes a maximum outer diameter of the inner cavity surface of the tire in the standardized state, "Dr" is a rim diameter, and $\pi$ denotes a circular constant.

The tensile strength of the noise suppressing body is desirably 70 to 115 kPa from the viewpoint of durability of the noise suppressing body or the like.

(Three-dimensional network structure)

As the three-dimensional network structures, in general, any three-dimensional network structure acting as a sound-absorbing material can be appropriately used. Specific examples of such sound-absorbing material include, for example, one described in JP 2018-90131 A. More specifically, the three-dimensional network structure is one formed by: irregularly intertwining a plurality of threads in which resin is melted and welding the intertwined parts.

The three-dimensional network structure is preferably fixed to the inner cavity of the tire. A method of fixing this structure to the inner cavity of the tire is not particularly limited, and the three-dimensional network structure may be bonded to the inner surface of the tire with, for example, an adhesive agent or the like, but the three-dimensional network structure can also be fixed by a sealant material forming the above-described sealant layer, which is preferable.

The thickness of the three-dimensional network structure is, but not particularly limited to, preferably 1.0 to 150 mm, more preferably 30 to 120 mm. The width of the structure is, but not limited to, preferably 50 to 95% of the width of the sealant layer, more preferably 60 to 90% of the width of the sealant layer, for the reason that the effects are more appropriately obtained.

A ratio of a cross-sectional area of the three-dimensional network structure (that is, (a cross-sectional area of the three-dimensional network structure / a cross-sectional area of the inner cavity of the tire) $\times$ 100) is preferably 2 to 90%, more preferably 5 to 70%, further preferably 20 to 70%, from the viewpoint of an efficient sound-absorbing performance. Here, in order to change the ratio of the cross-sectional area, for example, the width and thickness of the three-dimensional network structure may be changed. The cross-sectional area of the three-dimensional network structure means an apparent cross-sectional area of the three-dimensional network structure, the apparent cross-sectional area being determined from a contour of the three-dimensional network structure including its inner cavity. The cross-sectional area of the three-dimensional network structure is calculated by dividing the volume of the three-dimensional network structure by an average thickness of the three-dimensional network structure (a thickness in a tire radial direction). Here, the volume of the three-dimensional network structure means an apparent total volume of the three-dimensional network structure, the apparent total volume being determined from the contour of the three-dimensional network structure including its inner cavity. Moreover, the average thickness of the three-dimensional network structure also means an average thickness determined from the contour of the three-dimensional network structure including its inner cavity. Furthermore, in the present specification, the cross-sectional area of the inner cavity of the tire is calculated by dividing the total volume of the inner cavity of the tire by a height of the inner cavity of the tire in the tire radial direction.

An apparent density of the three-dimensional network structure is preferably 1.0 to 25.0 $\times 10^{-2}$ g/cm$^3$, more preferably 2.0 to 20.0 $\times 10^{-2}$ g/cm$^3$, further preferably 3.0 to 10.0 $\times 10^{-2}$ g/cm$^3$, from the viewpoint of an efficient sound-absorbing performance. Besides, in the present specification, the apparent density means a density calculated by regarding the cavity present inside the three-dimensional network structure also as the volume of the three-dimensional network structure and is calculated by dividing the mass of the three-dimensional network structure by the apparent total volume of the three-dimensional network structure (the volume determined from the contour of the three-dimensional network structure including its inner cavity). Specifically, the apparent density can be calculated by: preparing a cube-shaped measurement sample of about 1 m $\times$ 1 m $\times$ 1 m, using the three-dimensional network structure, and measuring the mass of the prepared measurement sample.

FIG. 5 is an enlarged cross-sectional view illustrating a part of the tread of the tire. In FIG. 5, the vertical direction is a tire radial direction, the horizontal direction is a width direction of the tire, and a direction perpendicular to a paper plane is a tire circumferential direction.

As illustrated in the drawing, the tread part of the tire of the present disclosure comprises a first rubber layer 6 and a second rubber layer 7 and may have a third rubber layer 8 (hereinafter, they may be simple described as a "first layer 6", a "second layer 7", and a "third layer 8", respectively). An outer surface of the first layer 6 forms a tread surface 3, the second layer 7 is adjacent to inside in the radial direction of the first layer 6, and the third layer 8 is adjacent to inside in the radial direction of the second layer 7. The first layer 6 typically corresponds to a cap tread. The third layer 8 typically corresponds to a base tread or an under tread. Since any typical shape of the second layer 7 is not determined, the second layer 7 may be a base tread or an under tread. Moreover, one or more rubber layers may be further provided between the third layer 8 and the belt layer as long as the object of the present disclosure can be achieved.

In FIG. 5, the deepest part of the groove bottom of the circumferential groove having the deepest groove depth among the plurality of the circumferential grooves is formed to be located on the inner side in the tire radial direction with respect to the outermost part of the second layer 7 in a land part 2 adjacent to that circumferential groove. That is, an extension line 5 of the deepest part of the groove bottom of the circumferential groove having the deepest groove depth among the plurality of the circumferential grooves is located on the inner side in the tire radial direction with respect to an extension line 9 of the outermost part of the second layer 7 in the land part 2 adjacent to that circumferential groove. Just under the circumferential groove having the deepest groove depth among the plurality of the circumferential grooves (on the inside in the tire radial direction), a concave part is provided which dents inside in the tire radial direction relative to the outermost part of the second layer 7 in the land part 2 adjacent to that circumferential groove, and a part of the first layer 6 is formed in the above-described concave part of the second layer 7 so as to have a predetermined thickness.

A ratio of a distance $H_2$ (mm) from the outermost surface of the tread part to the outermost part of the second rubber layer to the groove depth $H_1$ (mm) of the deepest part of the circumferential groove ($H_2/H_1$) is 0.40 or more, preferably 0.42 or more, more preferably 0.44 or more, further preferably 0.46 or more, particularly preferably 0,48 or more, from the viewpoints of the effects of the present disclosure. On the other hand, $H_2/H_1$ is 0.90 or less, preferably 0.80 or less, more preferably 0.75 or less, further preferably 0.70 or less, particularly preferably 0.65 or less.

A ratio of $E^*_T$ to $H_2/H_1$ ($E^*_T/(H_2/H_1)$) is 6.0 or more, preferably 7.0 or more, more preferably 8.0 or more, further preferably 9.0 or more, particularly preferably 10 or more, from the viewpoints of the effects of the present disclosure. An upper limit value of the ratio of $E^*_T$ to $H_2/H_1$ ($E^*_T/(H_2/H_1)$) is not particularly limited and can be, for example, 30 or less, 25 or less, 20 or less, or 15 or less.

In the present disclosure, the length of at least one land part in the width direction preferably increases gradually from the outside toward the inside in the tire radial direction. Such a configuration makes it easy to uniformly form a plurality of rubber layers on the lateral surfaces of the land parts in manufacturing the tire, so that it is considered that deterioration of noise performance at the later stage of abrasion becomes easy to be suppressed. Besides, although groove walls 7 of the circumferential grooves of the present disclosure linearly extend from the outside to the inside in the tire radial direction, they are not limited to such an aspect and may extend, for example, curvedly or step-wise.

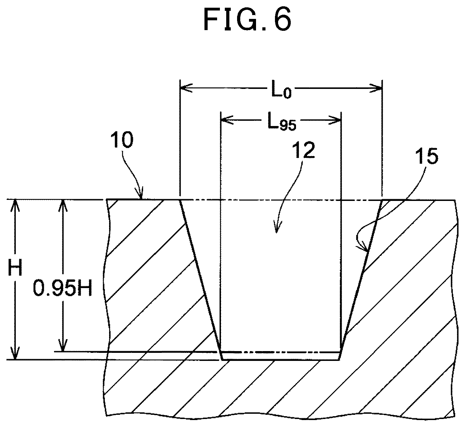

A ratio of a groove width at 95% of the deepest part of the groove bottom of the circumferential groove 12 ($L_{95}$) to a groove width $L_0$ on the tread surface of the circumferential groove 12 located on the outermost side when mounted on a vehicle ($L_0$) ($L_{95}/L_0$) is preferably 0.20 or more, more preferably 0.25 or more, further preferably 0.30 or more, particularly preferably 0.35 or more, from the viewpoint of effects of the present disclosure. Moreover, $L_{95}/L_0$ is preferably 0.80 or less, more preferably 0.70 or less, further preferably 0.65 or less, particularly preferably 0.60 or less. Besides, an illustration of each rubber layer is omitted in FIG. 6.

A 30°CE* of the first layer 6 ($E^*_T$) is preferably 3.0 MPa or more, more preferably 4.0 MPa or more, further preferably 5.0 MPa or more, particularly preferably 6.0 MPa or more. It is considered that, by setting the $E^*_T$ of the first layer 6 in the above-described ranges, force propagating from the second layer 7 becomes easy to be transmitted to a road surface. A 30°CE* of the second layer 7 ($E^*_B$) is preferably 4.0 MPa or more, more preferably 5.0 MPa or more, further preferably 6.0 MPa or more, particularly preferably 7.0 MPa or more, from the viewpoint of steering stability during high-speed running. A 30°CE* of the third layer 8 is preferably 3.0 MPa or more, more preferably 4.0 MPa or more, further preferably 5.0 MPa or more, particularly preferably 6.0 MPa or more. On the other hand, the 30°CE* of each of the first, second, and third layers 6, 7, and 8 is preferably 25 MPa or less, more preferably 20 MPa or less, further preferably 18 MPa or less, from the viewpoint of wet grip performance. A difference between complex elastic modulus, at 30°C, of the rubber layers adjacent to each other is preferably 1.0 MPa or more, more preferably 1.5 MPa or more, further preferably 2.0 MPa or more. By setting the difference between complex elastic modulus, at 30°C, of the rubber layers adjacent to each other in the above-described ranges, resonance between the rubber layers adjacent to each other can be more effectively suppressed. Besides, the 30°CE* of each rubber layer can be appropriately adjusted depending on types and compounding amounts of rubber components, fillers, and softening agents, and the like which are described below (particularly, softening agents).

The 30°C tan δ of the first layer 6 is preferably 0.25 or less, more preferably 0.24 or less, further preferably 0.23 or less, particularly preferably 0.22 or less. The 30°C tan δ of the second layer 7 is preferably 0.25 or less, more preferably 0.24 or less, further preferably 0.23 or less, particularly preferably 0.22 or less. The 30°C tan δ of the third layer 8 is preferably 0.25 or less, more preferably 0.24 or less, further preferably 0.23 or less, particularly preferably 0.22 or less. By setting the 30°C tan δ in the above-described ranges, a phase difference between an input and a response can be decreased, so that it is considered that smooth acceleration is easily achieved at the exit of the corner. On the other hand, the 30°C tan δ of each of the rubber component forming the first, second, and third layers 6, 7, and 8 is preferably 0.10 or more, more preferably 0.12 or more, further preferably 0.14 or more, from the viewpoint of wet grip performance. Besides, the 30°C tan δ of each rubber layer can be appropriately adjusted depending on types and compounding amounts of rubber components, fillers, and softening agents, and the like which are described below (particularly, softening agents).

The Tg of the first layer 6 is preferably -25°C or more, more preferably -20°C or more, further preferably -15°C or more. By setting the glass transition temperature of the first layer 6 in the above-described ranges, energy loss corresponding to a frequency of a vibration occurring at a rolling motion during normal running can be increased, and it is considered that absorption of the vibration can be facilitated. Moreover, the Tg of the second layer 7 is preferably -30°C or more, more preferably -25°C or more, further preferably -20°C or more. Besides, an upper limit value of the Tg of each of the first and second layers 6 and 7 is, but not particularly limited to, preferably 20°C or less, more preferably 15°C or less, further preferably 10°C or less. Besides, the Tg of each rubber layer can be appropriately adjusted depending on types and compounding amounts of rubber components, and the like which are described below.

The Shore hardness (Hs) of the first layer 6 is preferably 80 or less, more preferably 75 or less, further preferably 70 or less. Moreover, the Shore hardness (Hs) of the second layer 7 is preferably 80 or less, more preferably 75 or less, further preferably 70 or less. It is considered that, by setting the Shore hardness (Hs) of each of the first and second layers 6 and 7 in the above-described ranges, counterforce becomes easy to be obtained without impairing followability to the road surface. On the other hand, the Shore hardness (Hs) of each of the first and second layers 6 and 7 is preferably 50 or more, more preferably 55 or more, from the viewpoint of keeping block rigidity of the tire. Besides, the rubber hardness of each rubber layer can be appropriately adjusted depending on types and compounding amounts of rubber components, fillers, and softening agents, and the like which are described below.

The modulus of the first layer 6 at 100% elongation is preferably 1.0 MPa or more, more preferably 1.2 MPa or more, further preferably 1.4 MPa or more, particularly preferably 1.6 MPa or more. Moreover, the modulus of the second layer 7 at 100% elongation is preferably 1.0 MPa or more, more preferably 1.2 MPa or more, further preferably 1.4 MPa or more, particularly preferably 1.6 MPa or more. Besides, an upper limit value of the modulus of each of the first and second layers 6 and 7 at 100% elongation is, but not particularly limited to, usually 4.0 MPa or less, preferably 3.5 MPa or less. In the present disclosure, the modulus of the second layer 7 at 100% elongation is preferably greater than the modulus of the first layer 6 at 100% elongation. By setting the modulus of the second layer 7 at 100% elongation to be greater than the modulus of the first layer 6 at 100% elongation, a large force can be generated in the second layer 7, so that it is considered that steering stability during high-speed running becomes improved. A difference between the modulus of the second layer 7 at 100% elongation and the modulus of the first layer 6 at 100% elongation is preferably 0.1 MPa or more, more preferably 0.2 MPa or more, further preferably 0.3 MPa or more. Besides, the modulus of each rubber layer at 100% elongation can be appropriately adjusted depending on types and compounding amounts of rubber components, fillers, and softening agents, and the like which are described below.

[Rubber composition for tread]

The tread part of the present disclosure is characterized in that it is formed of two or more rubber layers and that the complex elastic modulus $E^*_B$ of the second layer at 30°C is greater than the complex elastic modulus $E^*_T$ of the first layer at 30°C. Any rubber composition forming each layer of the tread part can be produced using raw materials described below in accordance with a required complex elastic modulus at 30°C. The detailed descriptions are provided below.

<Rubber component>

In the rubber composition according to the present disclosure, a diene-based rubber is appropriately used as a rubber component. Examples of the diene-based rubber include, for example, an isoprene-based rubber, a butadiene rubber (BR), a styrene-butadiene rubber (SBR), a styrene- isoprene rubber (SIR), a styrene-isoprene-butadiene rubber (SIBR), a chloroprene rubber (CR), an acrylonitrile-butadiene rubber (NBR), and the like. These diene-based rubber components may be used alone, or two or more thereof may be used in combination.

A content of the diene-based rubber based on 100% by mass of the rubber component is preferably 70% by mass or more, more preferably 80% by mass or more, further preferably 90% by mass or more, particularly preferably 95% by mass or more. Moreover, the rubber component may be formed as a rubber component consisting only of a diene-based rubber.

The rubber composition according to the present disclosure preferably comprises, as a rubber component, at least one selected from a group consisting of an isoprene-based rubber, a styrene-butadiene rubber (SBR), and a butadiene rubber (BR). A rubber composition forming a rubber layer that is supposed to come into contact with a road surface due to abrasion caused by running (in the present disclosure, the first and second layers) comprises, as a rubber component, preferably a BR, more preferably a SBR and a BR, further preferably an isoprene-based rubber, a SBR, and a BR, or may comprise a rubber component consisting only of an isoprene-based rubber, a SBR, and a BR. On the other hand, a rubber composition forming a rubber layer that is not supposed to come into contact with a road surface due to abrasion caused by running comprises, as a rubber component, preferably an isoprene-based rubber, more preferably an isoprene-based rubber and a BR, or may comprise a rubber component consisting only of an isoprene-based rubber and a BR. Besides, in accordance with intended uses for and structures of tires, the third layer of the present disclosure may be formed as a rubber layer that is supposed to come into contact with a road surface due to running or as a rubber layer that is not supposed to come into contact with a road surface due to running.

(Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

In the rubber composition forming a rubber layer that is supposed to come into contact with a road surface due to running, a content of the isoprene-based rubber when compounded based on 100% by mass of the rubber component is preferably 50% by mass or less, more preferably 40% by mass or less, further preferably 30% by mass or less, particularly preferably 20% by mass or less, from the viewpoint of wet grip performance. Moreover, a lower limit value of the content of the isoprene-based rubber is not particularly limited and can be, for example, 1% by mass or more, 3% by mass or more, 5% by mass or more, or 10% by mass or more.

In the rubber composition forming a rubber layer that is not supposed to come into contact with a road surface due to running, a content of the isoprene-based rubber when compounded based on 100% by mass of the rubber component is preferably 50% by mass or more, more preferably 60% by mass or more, further preferably 70% by mass or more. Moreover, an upper limit value of the content of the isoprene-based rubber is not particularly limited.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminus and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated one of these SBRs (hydrogenated SBRs) and the like can also be used.

The SBRs recited above may be used alone, or two or more thereof may be used in combination. As the SBRs recited above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass, from the viewpoints of wet grip performance and abrasion resistance. Moreover, it is preferably 60% by mass or less, more preferably 55% by mass or less, further preferably 50% by mass or less, from the viewpoints of temperature dependency of grip performance and blow resistance. Besides, in the present specification, the styrene content of the SBR is calculated by $^1$H-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present specification, the vinyl content of the SBR is measured by the above-described measurement method.

A weight-average molecular weight (Mw) of the SBR is preferably 200,000 or more, more preferably 250,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present specification, the weight-average molecular weight of the SBR is measured by the above-described measurement method.

In the rubber composition forming a rubber layer that is supposed to come into contact with a road surface due to running, a content of the SBR when compounded based on 100% by mass of the rubber component is preferably 10% by mass or more, more preferably 20% by mass or more, further preferably 30% by mass or more, particularly preferably 40% by mass or more, from the viewpoint of wet grip performance. Moreover, an upper limit value of the content of SBR in the rubber component is not particularly limited and can be, for example, 90% by mass or less, 80% by mass or less, or 70% by mass or less. Besides, in the rubber composition forming a rubber layer that is not supposed to come into contact with a road surface due to running, a content of the SBR in the rubber component is not particularly limited.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available form Zeon Corporation, Ube Industries, Ltd., JSR Corporation, and the like can be used. When the high cis BR is compounded, low temperature characteristics and abrasion resistance can be improved. A cis content is preferably 95 mol% or more, more preferably 96 mol% or more, further preferably 97% or more, particularly preferably 98% or more. Besides, in the present specification, the cis content is measured by the above-described measurement method.

As the modified BR, a modified butadiene rubber (modified BR) is appropriately used which is modified by a functional group whose terminal and/or main chain comprise at least one element selected from a group consisting of silicon, nitrogen, and oxygen.

Examples of other modified BRs include those obtained by adding a tin compound after polymerizing 1,3-butadiene by a lithium initiator, the terminals of which are further bonded by tin-carbon bond (tin-modified BRs), and the like. Moreover, the modified BR mays be hydrogenated or non-hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

In the rubber composition forming a rubber layer that is supposed to come into contact with a road surface due to running, a content of the BR when compounded based on 100% by mass of the rubber component is preferably 60% by mass or less, more preferably 50% by mass or less, further preferably 45% by mass or less, particularly preferably 40% by mass or less, from the viewpoint of wet grip performance. Moreover, a lower limit value of the content of the BR is not particularly limited and can be, for example, 1% by mass or more, 3% by mass or more, 5% by mass or more, 10% by mass or more, or 15% by mass or more.

In the rubber composition forming a rubber layer that is not supposed to come into contact with a road surface due to running, a content of the BR when compounded based on 100% by mass of the rubber component is preferably 50% by mass or less, more preferably 40% by mass or less, further preferably 30% by mass or less. Moreover, a lower limit value of the content of the BR is not particularly limited and can be, for example, 1% by mass or more, 3% by mass or more, 5% by mass or more, or 10% by mass or more.

(Other rubber components)

The rubber component may comprise other rubber components than the diene-based rubbers to an extent that addition of such rubber components do not affect the effects of the present disclosure. As the other rubber components, cross-linkable rubber components commonly used in the tire industry can be used, examples of which include, for example, a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

An amount of a polymer in the rubber composition forming the first layer 6 is preferably 40% by mass or less, more preferably 39% by mass or less, further preferably 38% by mass or less, particularly preferably 37% by mass or less. Moreover, the amount of the polymer in the rubber composition forming the first layer 6 is preferably greater than an amount of a polymer in a rubber composition forming the second layer 7. It is considered that, by setting the amount of the polymer in the rubber composition forming the first layer 6 in the above-described ranges and setting the amount of the polymer in the rubber composition forming the first layer 6 to be greater than the amount of the polymer in the rubber composition forming the second layer 7, transmission of force from a polymer chain of the second layer 7 to the first rubber layer can be facilitated while suppressing, in the first layer 6, propagation of vibration by the polymer. Besides, a lower limit value of the amount of each of the polymers in the rubber compositions forming the first and second layers 6 and 7 is, but not particularly limited to, preferably 10% by mass or more, more preferably 15% by mass or more, further preferably 20% by mass or more, particularly preferably 25% by mass or more.

<Filler>

A filler comprising carbon black and/or silica is appropriately used for the rubber composition according to the present disclosure. The rubber composition forming a rubber layer that is supposed to come into contact with a road surface due to running comprises, as a filler, preferably silica, more preferably carbon black and silica. The rubber composition forming a rubber layer that is not supposed to come into contact with a road surface due to running preferably comprises carbon black as a filler.

(Carbon black)

Carbon black is not particularly limited, and those common in the tire industry can be used, such as, for example, GPF, FEF, HAF, ISAF, and SAF. The carbon black may be used alone, or two or more thereof may be used in combination.

A nitrogen adsorption specific surface area ($N_2SA$) of carbon black is preferably 10 $m^2/g$ or more, more preferably 30 $m^2/g$ or more, further preferably 50 $m^2/g$ or more, from the viewpoint of reinforcing property. Moreover, it is preferably 200 $m^2/g$ or less, more preferably 150 $m^2/g$ or less, further preferably 120 $m^2/g$ or less, from the viewpoints of fuel efficiency and processability. Besides, the $N_2SA$ of carbon black is a value measured according to JIS K 6217-2 "Carbon black for rubber industry-Fundamental characteristics-Part 2: Determination of specific surface area-Nitrogen adsorption methods-Single-point procedures".

In the rubber composition forming a rubber layer that is supposed to come into contact with a road surface due to running, a content of carbon black when compounded based on 100 parts by mass of the rubber component is preferably 1 part by mass or more, more preferably 3 parts by mass or more, further preferably 5 parts by mass or more, from the viewpoints of abrasion resistance and wet grip performance. Moreover, it is preferably 50 parts by mass or less, more preferably 35 parts by mass or less, further preferably 20 parts by mass or less, particularly preferably 10 parts by mass or less, from the viewpoint of fuel efficiency.

In the rubber composition forming a rubber layer that is not supposed to come into contact with a road surface due to running, a content of carbon black when compounded based on 100 parts by mass of the rubber component is preferably 20 part by mass or more, more preferably 25 parts by mass or more, further preferably 30 parts by mass or more. Moreover, the content of carbon black is preferably 100 parts by mass or less, more preferably 80 parts by mass or less, further preferably 60 parts by mass or less.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. The silica may be used alone, or two or more thereof may be used in combination.

A nitrogen adsorption specific surface area ($N_2SA$) of silica is preferably 120 $m^2$/g or more, more preferably 150 $m^2$/g or more, further preferably 170 $m^2$/g or more, from the viewpoints of fuel efficiency and abrasion resistance. Moreover, it is preferably 350 $m^2$/g or less, more preferably 300 $m^2$/g or less, further preferably 250 $m^2$/g or less, from the viewpoints of fuel efficiency and processability. Besides, the $N_2SA$ of silica in the present specification is a value measured by the BET method according to ASTM D3037-93.

In the rubber composition forming a rubber layer that is supposed to come into contact with a road surface due to running, a content of silica when compounded based on 100 parts by mass of the rubber component is preferably 40 parts by mass or more, more preferably 50 parts by mass or more, further preferably 60 parts by mass or more, particularly preferably 70 parts by mass or more, from the viewpoint of wet grip performance. Moreover, it is preferably 130 parts by mass or less, more preferably 120 parts by mass or less, further preferably 110 parts by mass or less, from the viewpoint of abrasion resistance. Besides, In the rubber composition forming a rubber layer that is not supposed to come into contact with a road surface due to running, a content of silica based on 100 parts by mass of the rubber component is not particularly limited.

A total content of silica and carbon black based on 100 parts by mass of the rubber component is preferably 40 parts by mass or more, more preferably 50 parts by mass or more, further preferably 60 parts by mass or more, particularly preferably 70 parts by mass or more, from the viewpoint of abrasion resistance. Moreover, it is preferably 160 parts by mass or less, more preferably 140 parts by mass or less, further preferably 120 parts by mass or less, from the viewpoints of fuel efficiency and elongation at break.

The rubber compositions forming the first and second layers 6 and 7 preferably each comprise a filler comprising silica. A content of silica in the filler is preferably 50% by mass or more, more preferably 60% by mass or more, further preferably 70% by mass or more, further preferably 80% by mass or more, further preferably 85% by mass or more, particularly preferably 90% by mass or more. By setting the content of silica in the filler in the above-described ranges, the loss tangent tan $\delta$ of the rubber composition can be decreased, and a phase difference between an input and a response can be decreased, so that it is considered that smooth acceleration is easily achieved at the exit of the corner.

In the rubber compositions forming the first and second layers 6 and 7, the content of silica based on 100 parts by mass of the rubber component is preferably greater than the content of carbon black from the viewpoint of a balance of fuel efficiency, wet grip performance, and abrasion resistance. A ratio of silica to a total content of silica and carbon black in the first and second layers 6 and 7 is preferably 60% by mass or more, more preferably 70% by mass or more, further preferably 80% by mass or more, further preferably 85% by mass or more, particularly preferably 90% by mass or more. Besides, a ratio of the contents of silica and carbon black in the rubber composition forming the third layer 8 is not particularly limited.

(Other fillers)

As the fillers, other fillers than carbon black and silica may be further used. Such fillers are not particularly limited, and any fillers commonly used in this field can be used, such as, for example, aluminum hydroxide, alumina (aluminum oxide), calcium carbonate, magnesium sulfate, talc, and clay. These fillers may be used alone, or two or more thereof may be used in combination.

(Silane coupling agent)

Silica is preferably used in combination with a silane coupling agent. The silane coupling agent is not particularly limited, and any silane coupling agents conventionally used in combination with silica in the tire industry can be used, such as, for example, a mercapto-based silane coupling agent such as 3-mercaptopropyltrimethoxysilane, 3-mercaptopropyltriethoxysilane, 2-mercaptoethyltrimethoxysilane, and 2-mercaptoethyltriethoxysilane; a sulfide-based silane coupling agent such as bis(3-triethoxysilylpropyl)disulfide and bis(3-triethoxysilylpropyl)tetrasulfide; a thioester-based silane coupling agent such as 3-octanoylthio-1-propyltriethoxysilane, 3-hexanoylthio-1-propyltriethoxysilane, and 3-octanoylthio-1-propyltrimethoxysilane; a vinyl-based silane coupling agent such as vinyltriethoxysilane and vinyltrimethoxysilane; an amino-based silane coupling agent such as 3-aminopropyltriethoxysilane, 3-aminopropyltrimethoxysilane, and 3-(2-aminoethyl)aminopropyltriethoxysilane; a glycidoxy-based silane coupling agent such as $\gamma$-glycidoxypropyltriethoxysilane and $\gamma$-glycidoxypropyltrimethoxysilane; a nitro-based silane coupling agent such as 3-nitropropyltrimethoxysilane and 3-nitropropyltriethoxysilane; and a chloro-based silane coupling agent such as 3-chloropropyltrimethoxysilane and 3-chloropropyltriethoxysilane. Among them, the rubber composition preferably comprises a sulfide-based silane coupling agent and/or a mercapto-based silane coupling agent. As the silane coupling agents, for example, those commercially available from Momentive Performance Materials and the like can be used. These silane coupling agents may be used alone, or two or more thereof may be used in combination.

A content of the silane coupling agent when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of improvement in silica dispersibility. Moreover, it is preferably 20 parts by mass or less, more preferably 15 parts by mass or less, further preferably 12 parts by mass or less, from the viewpoint of preventing deterioration of abrasion resistance.

A content of the silane coupling agent based on 100 parts by mass of silica is preferably 1.0 part by mass or more, more preferably 3.0 parts by mass or more, further preferably 5.0 parts by mass or more, from the viewpoint of improvement in silica dispersibility. Moreover, it is preferably 20 parts by mass or less, more preferably 15 parts by mass or less, further preferably 12 parts by mass or less, from the viewpoints of cost and processability.

<Other compounding agents>

The rubber composition according to the present disclosure can appropriately comprise compounding agents conventionally and commonly used in the tire industry, such as, for example, softening agent, wax, processing aid, stearic acid, zinc oxide, an antioxidant, a vulcanizing agent, and a vulcanization accelerator, in addition to the above-described components.

(Softening agent)

The rubber composition according to the present disclosure preferably comprises a softening agent. Examples of the softening agent include, for example, a resin component, oil, a liquid rubber, and the like.

Examples of the resin component include, but not particularly limited to, a hydrocarbon resin such as a petroleum resin, a terpene-based resin, a rosin-based resin, and a phenol-based resin, which are commonly used in the tire industry. These resin components may be used alone, or two or more thereof may be used in combination. Besides, at least one of the rubber compositions forming the first layer 6 and the rubber composition forming the second layer 7 preferably comprises a hydrocarbon resin and more preferably comprises an aromatic petroleum resin.

In the present specification, the "aromatic petroleum resin" means a resin obtained by polymerizing C9 fractions and may be those undergoing hydrogeneration or modification. Examples of the C9 fractions include, for example, a petroleum fraction having 8 to 10 carbon atoms, such as vinyltoluene, alkylstyrene, indene, and methylindene. As specific examples of the aromatic petroleum resin, for example, a coumarone-indene resin, a coumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable and a copolymer of $\alpha$-methylstyrene and styrene is more preferable, because it is economical, easy to process, and good in thermogenetic property. As the aromatic vinyl-based resin, for example, those commercially available from Kraton Corporation, Eastman Chemical Company, and the like can be used.

A content of the resin component when compounded based on 100 parts by mass of the rubber component is preferably 1 part by mass or more, more preferably 3 parts by mass or more, further preferably 5 parts by mass or more. Moreover, the content of the resin component is preferably 60 parts by mass or less, more preferably 50 parts by mass or less, further preferably 40 parts by mass or less, particularly preferably 30 parts by mass or less.

Examples of oil include, for example, process oils, vegetable oils and fats, animal oils and fats, and the like. Examples of the process oils include paraffinic process oils, naphthenic process oils, aromatic process oils, and the like. Moreover, a process oil having a low polycyclic-aromatic-compound (PCA) content for environmental measures can also be used. Examples of the process oil having a low PCA content include mild extraction solvates (MES); treated distillate aromatic extracts (TDAE); heavy naphthenic oil; and the like.

A content of oil when compounded based on 100 parts by mass of the rubber component is preferably 5 parts by mass or more, more preferably 10 parts by mass or more, further preferably 15 parts by mass or more, particularly preferably 20 parts by mass or more, from the viewpoint of processability. Moreover, it is preferably 120 parts by mass or less, more preferably 100 parts by mass or less, further preferably 80 parts by mass or less, from the viewpoint of abrasion resistance. Besides, in the present specification, the content of oil also comprises an amount of oil contained in an oil-extended rubber.

The liquid rubber is not particularly limited as long as it is a polymer in a liquid state at room temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the liquid rubber is preferably 50 parts by mass or less, more preferably 40 parts by mass or less, further preferably 20 parts by mass or less.

In the rubber composition forming a rubber layer that is supposed to come into contact with a road surface due to running, a content of the softening agent when compounded based on 100 parts by mass of the rubber component (in the case of use of a plurality of softening agents in combination, a total content of all the softening agents) is preferably 5 parts by mass or more, more preferably 10 parts by mass or more, further preferably 15 parts by mass or more, particularly preferably 20 parts by mass or more. Moreover, the content of the softening agent is preferably 120 parts by mass or less, more preferably 100 parts by mass or less, further preferably 90 parts by mass or less, particularly preferably 80 parts by mass or less.

In the rubber composition forming a rubber layer that is not supposed to come into contact with a road surface due to running, a content of the softening agent when compounded based on 100 parts by mass of the rubber component (in the case of use of a plurality of softening agents in combination, a total content of all the softening agents) is preferably 30 parts by mass or less, more preferably 25 parts by mass or less, further preferably 20 parts by mass or less, particularly preferably 15 parts by mass or less.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom. Wax may be used alone, or two or more thereof may be used in combination.

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill & Seilacher, Performance Additives, etc. can be used.

A content of processing aid when compounded based on 100 parts by mass of the rubber component is preferably 0.5 parts by mass or more, more preferably 1.0 part by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt, and as the antioxidants, a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine; and a quinoline-based antioxidant such as 2,2,4-trimethyl-1,2-dihydroquinoline polymer and 6-ethoxy-2,2,4-trimethyl-1,2-dihydroquinoline are preferable. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of the zinc oxide when compounded based on 100 parts by mass of the rubber component is preferably 0.5 parts by mass or more, more preferably 1.0 part by mass or more, further preferably 1.5 part by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 part by mass or more, further preferably 0.5 part by mass or more, from the viewpoint of securing a sufficient vulcanization reaction. Moreover, it is preferably 5.0 parts by mass or less, more preferably 4.0 parts by mass or less, further preferably 3.0 parts by mass or less, further preferably 2.5 parts by mass or less, from the viewpoint of prevention of deterioration. Besides, a content of the vulcanizing-agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, 1,6-hexamethylene-sodium dithiosulfate dehydrate, 1,6-bis(N,N'-dibenzylthiocarbamoyl dithio)hexan, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component (in the case of use of a plurality of vulcanization accelerators in combination, a total content of all the vulcanization accelerators) is preferably 1.0 part by mass or more, more preferably 2.0 parts by mass or more, further preferably 2.5 parts by mass or more. Moreover, the content of the vulcanization accelerator is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

The rubber composition according to the present disclosure can be produced by a known method. For example, it can be produced by kneading each of the above-described components with a rubber kneading machine such as an open roll and a sealed type kneader (a Banbury mixer, a kneader, and the like).

A kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step also can be divided into multiple steps as necessary.

Examples of kneading conditions include, but not particularly limited to, for example, a method of kneading at a discharge temperature of 150°C to 170°C for 3 minutes to 10 minutes in the base kneading step and kneading at 70°C to 110°C for 1 minute to 5 minutes in the final kneading step. Examples of vulcanization conditions include, but not particularly limited to, for example, a method of vulcanizing at a temperature of 150°C to 200°C for 10 minutes to 30 minutes.

The tire comprising the tread including the first and second layers 6 and 7 can be produced with the corresponding rubber compositions thereto, respectively, by a usual method. That is, the tire can be produced by extruding each unvulcanized rubber composition, which corresponds to each rubber layer obtained by the above-described method, into a shape of each rubber layer with an extruder equipped with a mouthpiece having a predetermined shape, attaching it together with other tire members on a tire forming machine and molding them by a usual method to form an unvulcanized tire, followed by heating and pressurizing this unvulcanized tire in a vulcanizing machine. Examples of vulcanization conditions include, but not particularly limited to, for example, a method of vulcanizing at a temperature of 150°C to 200°C for 10 minutes to 30 minutes.

<Intended use>

The tire of the present disclosure can be appropriately used as a tire for a passenger car, a tire for a truck/bus, a tire for a two-wheeled vehicle, or a racing tire, and among them, the tire is preferably used as a tire for a passenger car. Besides, the tire for a passenger car refers to a tire that is supposed to be mounted to a vehicle running with four wheels and that has a maximum load capacity of 1000 kg or less. Moreover, the tire of the present disclosure can be used as an all-season tire, a summer tire, or a winter tire such as a studless tire.

Hereinafter, the present disclosure will be described based on Examples, though the present disclosure is not limited to only these Examples.

<Production of rubber composition and tire>

Various chemicals used in Examples and Comparative examples are collectively shown below.

NR: TSR20
SBR1: Modified S-SBR produced in Production example 1 which will be described later (styrene content: 30% by mass, vinyl bond amount: 52 mol%, Mw: 250,000, a non-oil-extended product)
SBR2: Modified S-SBR produced in Production example 2 which will be described later (styrene content: 40% by mass, vinyl bond amount: 25 mol%, Mw:1,000,000, a non-oil-extended product)
SBR3: Modified S-SBR produced in Production example 3 which will be described later (styrene content: 25% by mass, vinyl bond amount: 25 mol%, Mw: 1,000,000, a non-oil-extended product)
BR: Ubepol BR (Registered Trademark) 150B manufactured by Ube Industries, Ltd. (cis content: 97 mol%, Mw: 440,000)
Carbon black: SHOW BLACK N220 manufactured by Cabot Japan K.K. ($N_2$SA: 111 $m^2$/g)
Silica: Ultrasil VN3 manufactured by Evonik Degussa GmbH ($N_2$SA: 175 $m^2$/g)
Silane coupling agent: Si226 manufactured by Evonik Degussa GmbH (bis(3-triethoxysilylpropyl)disulfide)
Oil: VivaTec 400 manufactured by H&R Group (TDAE oil)
Resin component: Sylvatraxx 4401 manufactured by Kraton Corporation (copolymer of $\alpha$-methylstyrene and styrene)
Zinc oxide: Zinc oxide No. 1 manufactured by Mitsui Mining & Smelting Co., Ltd.
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Wax: OZOACE 0355 manufactured by Nippon Seiro Co., Ltd.
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

Production example 1: Synthesis of SBR 1

An autoclave reactor subjected to nitrogen purge was charged with cyclohexane, tetrahydrofuran, styrene, and 1,3-butadiene. After adjusting temperature of contents in the reactor to 20°C, n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixture was subjected to removal of solvent by a steam stripping and dried by a heat roll whose temperature was adjusted to 110°C to obtain a SBR 1.

Production example 2: Synthesis of SBR 2

An autoclave reactor subjected to nitrogen purge was charged with cyclohexane, tetrahydrofuran, styrene, and 1,3-butadiene. Ratios of styrene and 1,3-butadiene were adjusted such that a styrene content became 40% by mass. After adjusting temperature of contents in the reactor to 20°C, n-butyllithium was added to initiate polymerization. The polymerization was performed under an adiabatic condition, and the temperature reached 80°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixture was subjected to removal of solvent by a steam stripping and dried by a heat roll whose temperature was adjusted to 110°C to obtain a SBR 2.

Production example 3: Synthesis of SBR 3

A SBR 3 was obtained in the similar manner as Production example 2, except that the ratios of styrene and 1,3-butadiene were adjusted such that a styrene content became 25% by mass.

<Production of low-density member>

(Low-density member 1 (noise suppressing body))

As a noise suppressing body 39, a polyurethane-based sponge was used which included an ether-based polyurethane sponge having a shape illustrated in FIG. 1. The noise suppressing body has a volume of 15% of the total volume of the inner cavity of the tire, and a density of $2.7 \times 10^{-2}$ g/cm$^3$, and a Tg of -50°C.

(Examples and Comparative examples)

According to the compounding formulations shown in Table 1, using a 1.7 L closed Banbury mixer, all chemicals other than sulfur and vulcanization accelerators were kneaded for 1 to 10 minutes until a discharge temperature reached 150°C to 160°C, to obtain a kneaded product. Next, using a twinscrew open roll, sulfur and vulcanization accelerators were added to the obtained kneaded product, and the mixture was kneaded for 4 minutes until the temperature reached 105°C, to obtain an unvulcanized rubber composition. The obtained unvulcanized rubber composition was molded into a shape of each of a first layer, a second layer, a third layer, and a fourth layer of a tread and attached together with other tire members to produce an unvulcanized tire, and the unvulcanized tire was vulcanized at 170°C, thereby obtaining test tires listed in Table 1 and Table 2. Besides, the groove depth $H_1$ of the deepest part of the circumferential groove was set to be 8.0 mm.

<Measurement of amount of polymer>

Each vulcanized rubber specimen prepared by being cut out of the inside of rubber layers of the tread part of each test tire was immersed in acetone for 24 hours in accordance with JIS K 6229:2015, thereby extracting an acetone-soluble component. Then, heating and drying were performed, thereby removing the solvent in each specimen, and a mass of each vulcanized rubber specimen after the extraction of the acetone-soluble component was measured. Next, this vulcanized rubber specimen was pyrolyzed by increasing the temperature at 10°C/min from the room temperature to 750°C in a nitrogen stream by a thermogravimetry in accordance with JIS K 6226-1:2003, and a mass of a sample obtained after the pyrolysis was measured. Additionally, the "amount of polymer (% by mass)" in each rubber composition was calculated by a difference between a mass of the vulcanized rubber specimen after the extraction of the acetone-soluble component and a mass of the sample obtained after the pyrolysis when the vulcanized rubber specimen before the extraction of acetone is regarded as being 100% by mass.

<Measurement of loss tangent tan $\delta$, complex elastic modulus E*, and glass transition temperature (Tg)>

For each rubber specimen prepared by being cut out of the inside of the rubber layers of a tread part of each test tire such that the specimen has a length of 20 mm, a width of 4 mm, and a thickness of 1 mm so that the tire circumferential direction becomes a long-side direction, a loss tangent tan $\delta$ and a complex elastic modulus of such a rubber specimen were measured using EPLEXOR Series manufactured by gabo Systemtechnik GmbH under a condition of a temperature at 30°C, a frequency of 10 Hz, an initial strain of 5%, and a dynamic strain of 1%. Moreover, a temperature distribution curve of the tan $\delta$ was measured under a condition of a frequency of 10 Hz, an initial strain of 10%, an amplitude of $\pm$ 0.5%, and a temperature rising rate of 2°C/min, and a temperature corresponding to the largest value of the tan $\delta$ in the obtained temperature distribution curve (tang $\delta$ peak temperature) was regarded as a glass transition temperature (Tg). Besides, a direction of the thickness of the sample was set to match the tire radial direction.

<Measurement of rubber hardness (Hs)>

The Shore hardness (Hs) of each rubber specimen at 23°C was measured in accordance with JIS K 6253-3:2012 using a type-A durometer. Besides, each rubber specimen used for the measurement was one cut out of the inside of the rubber layer of the tread part of each test tire.

<Tensile test>

A No 7. dumbbell specimen having a width of 1 mm was prepared by being cut out of the inside of the rubber layers of the tread part of each test tire such that the circumferential direction of the test tire matches a tensile direction, and a tensile test of the specimen was performed in accordance with JIS K 6251:2017 (Method of finding tensile testing characteristics for vulcanized rubber and thermoplastic rubber) under an atmosphere at 23°C under a condition of a tension rate of 3.3 mm/sec, and a modulus at 100% elongation (MPa) was measured. Besides, a direction of the width of the sample was set to match the tire radial direction.

<Steering stability>

Each test tire was mounted on four wheels of an FF passenger vehicle with a displacement of 2000 cc, and the FF passenger vehicle was run on a test course with a dry asphalt road surface. Handling characteristics were evaluated based on a test driver's feeling when the FF passenger vehicle was accelerated at an exit of a corner. The evaluations were performed on a scale of one to ten of integer values, and a total score of scores given by ten test drivers was calculated under evaluation criteria in which higher scores mean better handling characteristics. A total score of each Comparative example 1 and Comparative example 7 was converted into a standard value (100), and an evaluation result of each test tire was indicated as an index so that the evaluation result of each test tire was proportional to the total score.

<Noise performance>

Each of bland-new test tires and each of test tires after abrasion were mounted on four wheels of an FF passenger vehicle with a displacement of 2000 cc, and the FF passenger vehicle was run on a test course with a dry asphalt road surface. Noises felt by test drivers inside the FF passenger vehicle running at 120 km/hour were evaluated based on their respective feeling. The evaluations were performed on a scale of one to ten of integer values, and a total score of scores given by ten test drivers was calculated under evaluation criteria in which higher scores mean better nose performance. A total score of each Comparative example 1 and Comparative example 7 was converted into a standard value (100), and an evaluation result of each test tire was indicated as an index so that the evaluation result of each test tire was proportional to the total score.

Besides, a performance target value for a total performance of steering stability and noise performance (the sum of a steering stability index and a noise deterioration suppression index) is set to be greater than 200.

| Table 1 | | | | | | | | |
|---|---|---|---|---|---|---|---|---|
| | Rubber layer | | | | | | | |
| | A | B | C | D | E | F | G | H |
| Compounding amount (part by mass) | | | | | | | | |
| NR | 10 | 10 | 10 | 10 | 10 | 10 | - | 75 |
| SBR 1 | 75 | 75 | 70 | 70 | 70 | 70 | - | - |
| SBR 2 | - | - | - | - | - | - | 20 | - |
| SBR 3 | - | - | - | - | - | - | 65 | - |
| BR | 15 | 15 | 20 | 20 | 20 | 20 | 15 | 25 |
| Carbon black | 10 | 10 | 5.0 | 5.0 | 5.0 | 5.0 | 10 | 40 |
| Silica | 110 | 110 | 75 | 75 | 75 | 80 | 90 | - |
| Silane coupling agent | 11 | 11 | 7.5 | 7.5 | 7.5 | 8.0 | 7.0 | - |
| Oil | 75 | 70 | 35 | 25 | 20 | 50 | 20 | - |
| Resin component | - | - | - | - | - | - | 20 | - |
| Zinc oxide | 2.0 | 2.0 | 2.0 | 2.0 | 2.0 | 3.0 | 2.0 | 2.0 |
| Antioxidant | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 1.0 | 1.5 |
| Sulfur | 1.5 | 1.5 | 1.5 | 1.5 | 1.5 | 1.5 | 1.0 | 2.0 |
| Vulcanization accelerator 1 | 2.4 | 2.4 | 1.8 | 1.8 | 1.8 | 1.8 | 2.0 | 0.5 |
| Vulcanization accelerator 2 | 2.6 | 2.6 | 2.1 | 2.1 | 2.1 | 2.2 | 2.0 | 1.5 |

(continued)

### Table 1

| | Rubber layer | | | | | | | |
|---|---|---|---|---|---|---|---|---|
| | A | B | C | D | E | F | G | H |
| **Compounding amount (part by mass)** | | | | | | | | |
| | | | | | | | | |
| **Physical properties** | | | | | | | | |
| Amount of polymer (% by mass) | 33 | 34 | 43 | 45 | 46 | 40 | 41 | 66 |
| 30°C E*(MPa) | 6.0 | 7.0 | 7.0 | 9.0 | 10.0 | 4.0 | 8.0 | 4.0 |
| 30°C tan $\delta$ | 0.27 | 0.27 | 0.20 | 0.20 | 0.20 | 0.20 | 0.30 | 0.07 |
| Tg (°C) | -11 | -11 | -10 | -10 | -10 | -10 | -12 | -30 |
| Shore hardness (Hs) | 60 | 61 | 61 | 64 | 65 | 57 | 63 | 54 |
| 100% modulus (MPa) | 2.4 | 2.6 | 2.6 | 2.9 | 3.1 | 2.0 | 2.2 | 1.8 |

### Table 2

Test tire 1 (Size: 175/55R20, Rim: 5.5 ×20J)

| | Example | | | | | | | |
|---|---|---|---|---|---|---|---|---|
| | 1 | 2 | 3 | 4 | 5 | 6 | 7 | 8 |
| First layer | A | A | A | B | B | A | B | A |
| Second layer | C | D | E | D | E | E | E | D |
| Third layer | H | H | H | H | H | H | H | E |
| Fourth layer | - | - | - | - | - | - | - | H |
| $E^*_T$ (MPa) | 6.0 | 6.0 | 6.0 | 7.0 | 7.0 | 6.0 | 7.0 | 6.0 |
| $E^*_B$ (MPa) | 7.0 | 9.0 | 10.0 | 9.0 | 10.0 | 9.0 | 10.0 | 9.0 |
| $H_2/H_1$ | 0.50 | 0.50 | 0.50 | 0.50 | 0.50 | 0.50 | 0.70 | 0.50 |
| $E^*_T/(H_2/H_1)$ | 12.0 | 12.0 | 12.0 | 14.0 | 14.0 | 12.0 | 14.0 | 12.0 |
| $S_1/S$ | 0.34 | 0.34 | 0.34 | 0.34 | 0.34 | 0.34 | 0.34 | 0.34 |
| $S_2/S$ | 0.34 | 0.34 | 0.34 | 0.34 | 0.34 | 0.34 | 0.34 | 0.34 |
| $W_2/W_1$ | 0.15 | 0.15 | 0.15 | 0.15 | 0.15 | 0.15 | 0.15 | 0.15 |
| $W_3/W_1$ | 0.15 | 0.15 | 0.15 | 0.15 | 0.15 | 0.15 | 0.15 | 0.15 |
| Low-density member | - | - | - | - | - | - | - | - |
| Ratio of groove area in center land part (%) | 27 | 27 | 27 | 27 | 27 | 27 | 27 | 27 |
| Ratio of groove area in shoulder land parts (%) | 30 | 30 | 30 | 30 | 30 | 30 | 30 | 30 |
| Tread pattern | FIG. 2 | FIG. 2 | FIG. 2 | FIG. 2 | FIG. 2 | FIG. 2 | FIG. 2 | FIG. 2 |
| $L_{95}/L_0$ | 0.50 | 0.50 | 0.50 | 0.50 | 0.50 | 0.50 | 0.50 | 0.50 |

| | Example | | | | | | | |
|---|---|---|---|---|---|---|---|---|
| | 1 | 2 | 3 | 4 | 5 | 6 | 7 | 8 |
| Steering stability index | 100 | 110 | 120 | 120 | 130 | 120 | 126 | 116 |
| Noise deterioration suppression index | 120 | 116 | 110 | 96 | 90 | 126 | 110 | 130 |

| | Example | | | | | | |
|---|---|---|---|---|---|---|---|
| | 9 | 10 | 11 | 12 | 13 | 14 | 15 |
| First layer | A | A | A | A | A | F | A |
| Second layer | E | E | E | E | E | B | G |

(continued)

| | Example | | | | | | |
|---|---|---|---|---|---|---|---|
| | 9 | 10 | 11 | 12 | 13 | 14 | 15 |
| Third layer | H | H | H | H | H | H | H |
| Fourth layer | - | - | - | - | - | - | - |
| $E^*_T$ (MPa) | 6.0 | 6.0 | 6.0 | 6.0 | 6.0 | 4.0 | 6.0 |
| $E^*_B$ (MPa) | 10.0 | 10.0 | 10.0 | 10.0 | 10.0 | 7.0 | 8.0 |
| $H_2/H_1$ | 0.50 | 0.50 | 0.50 | 0.50 | 0.50 | 0.50 | 0.50 |
| $E^*_T/(H_2/H_1)$ | 12.0 | 12.0 | 12.0 | 12.0 | 12.0 | 8.0 | 12.0 |
| $S_1/S$ | 0.34 | 0.34 | 0.34 | 0.36 | 0.36 | 0.34 | 0.34 |
| $S_2/S$ | 0.34 | 0.34 | 0.34 | 0.32 | 0.32 | 0.34 | 0.34 |
| $W_2/W_1$ | 0.15 | 0.15 | 0.15 | 0.15 | 0.20 | 0.15 | 0.15 |
| $W_3/W_1$ | 0.15 | 0.15 | 0.15 | 0.15 | 0.10 | 0.15 | 0.15 |
| Low-density member | 1 | - | - | - | - | - | - |
| Ratio of groove area in center land part (%) | 27 | 30 | 27 | 27 | 27 | 27 | 27 |
| Ratio of groove area in shoulder land parts (%) | 30 | 27 | 30 | 30 | 30 | 30 | 30 |
| Tread pattern | FIG. 2 | FIG. 2 | FIG. 2 | FIG. 3 | FIG. 4 | FIG. 2 | FIG. 2 |
| $L_{95}/L_0$ | 0.50 | 0.50 | 1.00 | 0.50 | 0.50 | 0.50 | 0.50 |
| Steering stability index | 120 | 120 | 120 | 126 | 130 | 96 | 106 |
| Noise deterioration suppression index | 120 | 106 | 106 | 120 | 120 | 136 | 116 |

| | Comparative example | | | | | |
|---|---|---|---|---|---|---|
| | 1 | 2 | 3 | 4 | 5 | 6 |
| First layer | B | C | A | B | F | F |
| Second layer | C | A | F | D | B | B |
| Third layer | H | H | - | H | H | H |
| Fourth layer | - | - | - | - | - | - |
| $E^*_T$ (MPa) | 7.0 | 7.0 | 6.0 | 7.0 | 4.0 | 4.0 |
| $E^*_B$ (MPa) | 7.0 | 6.0 | 4.0 | 9.0 | 7.0 | 7.0 |
| $H_2/H_1$ | 0.50 | 0.50 | 0.50 | 1.10 | 0.80 | 0.30 |
| $E^*_T/(H_2/H_1)$ | 14.0 | 14.0 | 12.0 | 6.3 | 5.0 | 13.0 |
| $S_1/S$ | 0.34 | 0.34 | 0.34 | 0.34 | 0.34 | 0.34 |
| $S_2/S$ | 0.34 | 0.34 | 0.34 | 0.34 | 0.34 | 0.34 |
| $W_2/W_1$ | 0.15 | 0.15 | 0.15 | 0.15 | 0.15 | 0.15 |
| $W_3/W_1$ | 0.15 | 0.15 | 0.15 | 0.15 | 0.15 | 0.15 |
| Low-density member | - | - | - | - | - | - |
| Ratio of groove area in center land part (%) | 27 | 27 | 27 | 27 | 27 | 27 |
| Ratio of groove area in shoulder land parts (%) | 30 | 30 | 30 | 30 | 30 | 30 |
| Tread pattern | FIG. 2 | FIG. 2 | FIG.2 | FIG. 2 | FIG. 2 | FIG. 2 |
| $L_{95}/L_0$ | 0.50 | 0.50 | 0.50 | 0.50 | 0.50 | 0.50 |
| Steering stability index | 100 | 90 | 80 | 76 | 70 | 90 |
| Noise deterioration suppression index | 100 | 106 | 116 | 96 | 124 | 110 |

Table 3

Test tire 2 (Size: 205/55R16, Rim: 6.5 ×16J)

| | Example | | | | | | | |
|---|---|---|---|---|---|---|---|---|
| | 16 | 17 | 18 | 19 | 20 | 21 | 22 | 23 |
| First layer | A | A | A | B | B | A | B | A |
| Second layer | C | D | E | D | E | E | E | D |

(continued)

| Test tire 2 (Size: 205/55R16, Rim: 6.5 ×16J) | | | | | | | | |
|---|---|---|---|---|---|---|---|---|
| | Example | | | | | | | |
| | 16 | 17 | 18 | 19 | 20 | 21 | 22 | 23 |
| Third layer | H | H | H | H | H | H | H | E |
| Fourth layer | - | - | - | - | - | - | - | H |
| $E^*_T$ (MPa) | 6.0 | 6.0 | 6.0 | 7.0 | 7.0 | 6.0 | 7.0 | 6.0 |
| $E^*_B$ (MPa) | 7.0 | 9.0 | 10.0 | 9.0 | 10.0 | 9.0 | 10.0 | 9.0 |
| $H_2/H_1$ | 0.50 | 0.50 | 0.50 | 0.50 | 0.50 | 0.50 | 0.70 | 0.50 |
| $E^*_T/(H_2/H_1)$ | 12.0 | 12.0 | 12.0 | 14.0 | 14.0 | 12.0 | 14.0 | 12.0 |
| $S_1/S$ | 0.34 | 0.34 | 0.34 | 0.34 | 0.34 | 0.34 | 0.34 | 0.34 |
| $S_2/S$ | 0.34 | 0.34 | 0.34 | 0.34 | 0.34 | 0.34 | 0.34 | 0.34 |
| $W_2/W_1$ | 0.15 | 0.15 | 0.15 | 0.15 | 0.15 | 0.15 | 0.15 | 0.15 |
| $W_3/W_1$ | 0.15 | 0.15 | 0.15 | 0.15 | 0.15 | 0.15 | 0.15 | 0.15 |
| Low-density member | - | - | - | - | - | - | - | - |
| Ratio of groove area in center land part (%) | 27 | 27 | 27 | 27 | 27 | 27 | 27 | 27 |
| Ratio of groove area in shoulder land parts (%) | 30 | 30 | 30 | 30 | 30 | 30 | 30 | 30 |
| Tread pattern | FIG. 2 | FIG. 2 | FIG. 2 | FIG. 2 | FIG. 2 | FIG. 2 | FIG. 2 | FIG. 2 |
| $L_{95}/L_0$ | 0.50 | 0.50 | 0.50 | 0.50 | 0.50 | 0.50 | 0.50 | 0.50 |
| Steering stability index | 100 | 112 | 122 | 124 | 128 | 122 | 124 | 114 |
| Noise deterioration suppression index | 118 | 114 | 108 | 98 | 94 | 124 | 112 | 124 |

| | Example | | | | | | |
|---|---|---|---|---|---|---|---|
| | 24 | 25 | 26 | 27 | 28 | 29 | 30 |
| First layer | A | A | A | A | A | F | A |
| Second layer | E | E | E | E | E | B | G |
| Third layer | H | H | H | H | H | H | H |
| Fourth layer | - | - | - | - | - | - | - |
| $E^*_T$ (MPa) | 6.0 | 6.0 | 6.0 | 6.0 | 6.0 | 4.0 | 6.0 |
| $E^*_B$ (MPa) | 10.0 | 10.0 | 10.0 | 10.0 | 10.0 | 7.0 | 8.0 |
| $H_2/H_1$ | 0.50 | 0.50 | 0.50 | 0.50 | 0.50 | 0.50 | 0.50 |
| $E^*_T/(H_2/H_1)$ | 12.0 | 12.0 | 12.0 | 12.0 | 12.0 | 8.0 | 12.0 |
| $S_1/S$ | 0.34 | 0.34 | 0.34 | 0.36 | 0.36 | 0.34 | 0.34 |
| $S_2/S$ | 0.34 | 0.34 | 0.34 | 0.32 | 0.32 | 0.34 | 0.34 |
| $W_2/W_1$ | 0.15 | 0.15 | 0.15 | 0.15 | 0.20 | 0.15 | 0.15 |
| $W_3/W_1$ | 0.15 | 0.15 | 0.15 | 0.15 | 0.10 | 0.15 | 0.15 |
| Low-density member | 1 | - | - | - | - | - | - |
| Ratio of groove area in center land part (%) | 27 | 30 | 27 | 27 | 27 | 27 | 27 |
| Ratio of groove area in shoulder land parts (%) | 30 | 27 | 30 | 30 | 30 | 30 | 30 |
| Tread pattern | FIG. 2 | FIG. 2 | FIG. 2 | FIG. 3 | FIG. 4 | FIG. 2 | FIG. 2 |
| $L_{95}/L_0$ | 0.50 | 0.50 | 1.00 | 0.50 | 0.50 | 0.50 | 0.50 |
| Steering stability index | 122 | 120 | 124 | 130 | 132 | 100 | 106 |
| Noise deterioration suppression index | 122 | 108 | 110 | 122 | 120 | 134 | 116 |

| | Comparative example | | | | | |
|---|---|---|---|---|---|---|
| | 7 | 8 | 9 | 10 | 11 | 12 |
| First layer | B | C | A | B | F | F |
| Second layer | C | A | F | D | B | B |
| Third layer | H | H | - | H | H | H |
| Fourth layer | - | - | - | - | - | - |
| $E^*_T$ (MPa) | 7.0 | 7.0 | 6.0 | 7.0 | 4.0 | 4.0 |
| $E^*_B$ (MPa) | 7.0 | 6.0 | 4.0 | 9.0 | 7.0 | 7.0 |
| $H_2/H_1$ | 0.50 | 0.50 | 0.50 | 1.10 | 0.80 | 0.30 |
| $E^*_T/(H_2/H_1)$ | 14.0 | 14.0 | 12.0 | 6.3 | 5.0 | 13.0 |
| $S_1/S$ | 0.34 | 0.34 | 0.34 | 0.34 | 0.34 | 0.34 |
| $S_2/S$ | 0.34 | 0.34 | 0.34 | 0.34 | 0.34 | 0.34 |
| $W_2/W_1$ | 0.15 | 0.15 | 0.15 | 0.15 | 0.15 | 0.15 |
| $W_3/W_1$ | 0.15 | 0.15 | 0.15 | 0.15 | 0.15 | 0.15 |
| Low-density member | - | - | - | - | - | - |
| Ratio of groove area in center land part (%) | 27 | 27 | 27 | 27 | 27 | 27 |
| Ratio of groove area in shoulder land parts (%) | 30 | 30 | 30 | 30 | 30 | 30 |
| Tread pattern | FIG. 2 | FIG. 2 | FIG. 2 | FIG. 2 | FIG. 2 | FIG. 2 |
| $L_{95}/L_0$ | 0.50 | 0.50 | 0.50 | 0.50 | 0.50 | 0.50 |
| Steering stability index | 100 | 90 | 82 | 78 | 70 | 86 |
| Noise deterioration suppression index | 100 | 104 | 110 | 98 | 122 | 108 |

From the results shown in Tables 1 to 3, it can be found that, for the tire of the present disclosure in which two or more rubber layers are stacked in the tread part of the tire and complex elastic modulus of the rubber layers and groove depths of circumferential grooves are made to have a predetermined relationship, the total performance of steering stability during high-speed running and noise performance is improved.

REFERENCE SIGNS LIST

| | |
|---|---|
| 1 | Tread part |
| 2 | Land part |
| 4 | Extension line of land part |
| 5 | Extension line of deepest part of groove bottom of circumferential groove |
| 6 | First layer |
| 7 | Second layer |
| 8 | Third layer |
| 9 | Extension line of outermost part of second layer |
| 10 | Tread surface |
| 11, 12, 13, 14 | Circumferential groove |
| 15 | Groove wall of circumferential groove |
| 16 | Outer shoulder land part |
| 17 | Inner shoulder land part |
| 18 | Outer center land part |
| 19 | Inner center land part |
| 20 | Center land part |
| 21 | Shoulder lateral groove |
| 22 | Shoulder sipe |
| 23 | Center sipe |
| 31 | Bead core |
| 32 | Side wall |
| 33 | Bead part |
| 34 | Carcass |

| 35 | Belt |
| 36 | Band |
| 37 | Concave groove |
| 38 | Rim |
| 39 | Noise suppressing body |
| 61 | Edge band |
| 62 | Full band |
| C | Tire equatorial plane |
| CL | Centerline of tire |
| To | Outer tread end |
| Ti | Inner tread end |
| W | Tire width direction |
| $H_1$ | Groove depth of circumferential groove |

**Claims**

1. A tire comprising a tread part (1), the tread part comprising at least a first rubber layer (6) forming a tread surface (10) and a second rubber layer (7) adjacent to an inner side of the first rubber layer (6) in a tire radial direction,

   wherein the tread part (1) comprises

   two or more circumferential grooves (11, 12, 13, 14) extending continuously in a tire circumferential direction, a pair of shoulder land parts (16, 17) partitioned by the circumferential grooves (11, 12, 13, 14) and grounding ends, and
   a center land part (20) located between the pair of the shoulder land parts (16, 17),

   wherein the first rubber layer (6) and the second rubber layer (7) are formed of a rubber composition comprising a rubber component,
   wherein a ratio of a distance $H_2$, expressed in mm, from an outermost surface of the tread part (1) to an outermost part of the second rubber layer (9) to a groove depth $H_1$ of deepest parts of the circumferential grooves, $H_2/H_1$, is 0.40 to 0.90, and
   wherein, when a complex elastic modulus at 30°C of the first rubber layer is defined as $E^*_T$ and expressed in MPa and a complex elastic modulus at 30°C of the second rubber layer (7) is defined as $E^*_B$ and expressed in MPa, $E^*_B$ is greater than $E^*_T$, and a ratio of $E^*_T$ to $H_2/H_1$, $E^*/(H_2/H_1)$, is 6.0 or more,
   wherein the complex elastic modulus is measured under a condition of a temperature at 30°C, a frequency of 10 Hz, an initial strain of 5%, and a dynamic strain of 1%,

   and wherein one of options (i) or (ii) is realized:

   (i) the ratio of the area of the land part (2) in the grounding surface is asymmetric with respect to a tire equatorial plane (C),

   wherein the ratio of the area of a land part in a grounding surface refers to a ratio of a total area of the shoulder and parts and the center land part of to the total area S of the grounding surface, and
   wherein, when the tire is mounted to a vehicle, the area $S_1$ of the land part in a direction from the tire equatorial plane to the inside of the vehicle is less than the area $S_2$ of the land part in the direction from the tire equatorial plane to the outside of the vehicle, or

   (ii) the circumferential grooves (11, 12) are not present on the tire equatorial plane (C),

   wherein, when the tire is mounted to a vehicle, a distance ($W_2$) from the tire equatorial plane (C) to the groove edge of the circumferential groove (11) nearest to an inner direction of the vehicle is different from a distance ($W_3$) from the tire equatorial plane (C) to the groove edge of the circumferential groove (12) nearest to an outer direction of the vehicle,
   wherein, when the tire is mounted to the vehicle, the distance ($W_2$) from the tire equatorial plane (C) to the groove edge of the circumferential groove (11) located nearest to the inside of the vehicle is larger than the distance ($W_3$) from the tire equatorial plane to the groove edge of the circumferential groove (12) located nearest to the outside of the vehicle.

2. The tire according to claim 1, the tread part (1) comprising a third rubber layer (8) adjacent to an inner side of the second rubber layer (7) in a tire radial direction.

3. The tire according to any one of claim 1 or 2,

wherein an amount of a polymer in the rubber composition forming the first rubber layer (6) is 40% by mass or less, wherein the amount of the polymer in the rubber composition forming the first rubber layer (6) is greater than an amount of a polymer in the rubber composition forming the second rubber layer (7).

4. The tire according to any one of claims 1 to 3, wherein a ratio of an area of the land part (2) in a grounding surface is 60 to 80%.

5. The tire according to any one of claims 1 to 4, wherein a ratio of groove areas in the shoulder land parts (16, 17) is greater than a ratio of a groove area in the center land part (20).

6. The tire according to any one of claims 1 to 5, wherein a length of at least one land part of the land parts (16, 17) in a width direction increases gradually from an outside toward an inside in a tire radial direction.

7. The tire according to any one of claims 1 to 6, wherein, when a groove width on the tread surface (10) of the circumferential groove located on the outermost side when mounted on a vehicle is defined as $L_0$, and a groove width at 95% of the deepest part of the groove bottom of the circumferential groove located on the outermost side when mounted on the vehicle is defined as $L_{95}$, $L_{95}/L_0$ is 0.20 to 0.80.

8. The tire according to any one of claims 1 to 7, wherein at least one of the rubber composition forming the first rubber layer and the rubber composition forming the second rubber layer (7) comprises a hydrocarbon resin.

9. The tire according to any one of claims 1 to 8, wherein the complex elastic modulus $E^*_T$ of the first rubber layer (6) at 30°C is 4.0 MPa or more.

10. The tire according to any one of claims 1 to 9, wherein tan $\delta$ of the second rubber layer (7) at 30°C is 0.25 or less.

11. The tire according to any one of claims 1 to 10, wherein a glass transition temperature of the first rubber layer (6) is -25°C or more.

12. The tire according to any one of claims 1 to 11, wherein Shore hardness (Hs) of the second rubber layer (7) measured at 23°C in accordance with JIS K 6253-3:2012 using a type-A durometer is 50 to 80.

13. The tire according to any one of claims 1 to 12, wherein a modulus of the second rubber layer (7) at 100% elongation is greater than a modulus of the first rubber layer (6) at 100% elongation.

**Patentansprüche**

1. Reifen mit einem Laufflächenabschnitt (1), wobei der Laufflächenabschnitt mindestens eine erste Gummischicht (6), die eine Lauffläche (10) bildet, und eine zweite Gummischicht (7) umfasst, die in Radialrichtung des Reifens an die Innenseite der ersten Gummischicht (6) angrenzt,

wobei der Laufflächenabschnitt (1) umfasst

zwei oder mehr Umfangsrillen (11, 12, 13, 14), die sich kontinuierlich in einer Reifenumfangsrichtung erstrecken, ein Paar Schulterlandteile (16, 17), die durch die Umfangsrillen (11, 12, 13, 14) und Aufstandsenden unterteilt sind, und einen Mittellandteil (20), der zwischen dem Paar Schulterlandteile (16, 17) angeordnet ist,

wobei die erste Gummischicht (6) und die zweite Gummischicht (7) aus einer Kautschukzusammensetzung gebildet sind, die eine Kautschukkomponente umfasst, wobei das Verhältnis des Abstands $H_2$, ausgedrückt in mm, von einer äußersten Oberfläche des Laufflächenabschnitts (1) zu einem äußersten Teil der zweiten Gummischicht (9) zur Rillentiefe $H_1$ der tiefsten Teile der Umfangsrillen, $H_2/H_1$, 0,40 bis 0,90 beträgt, und

wobei, wenn ein komplexer Elastizitätsmodul bei 30 °C der ersten Gummischicht als $E^*_T$ definiert ist, ausgedrückt in MPa, und ein komplexer Elastizitätsmodul bei 30 °C der zweiten Gummischicht (7) als $E^*_B$ definiert ist, ausgedrückt in MPa, $E^*_B$ größer ist als $E^*_T$ und ein Verhältnis von $E^*_T$ zu $H_2/H_1$, $E^*_T/(H_2/H_1)$, 6,0 oder mehr ist, wobei der komplexe Elastizitätsmodul unter einer Temperatur von 30 °C, einer Frequenz von 10 Hz, einer Anfangsdehnung von 5 % und einer dynamischen Dehnung von 1 % gemessen wird,

und wobei eine der Optionen (i) oder (ii) realisiert ist:

(i) das Verhältnis der Fläche des Landteils (2) in der Aufstandsfläche ist in Bezug auf eine Reifenäquatorialebene (C) asymmetrisch,

wobei sich das Verhältnis der Fläche eines Landteils in einer Aufstandsfläche auf das Verhältnis der Gesamtfläche der Schulterlandteile und des Mittellandteils zur Gesamtfläche S der Aufstandsfläche bezieht, und

wobei, wenn der Reifen am Fahrzeug montiert ist, die Fläche $S_1$ des Landteils in einer Richtung von der Reifenäquatorialebene zur Innenseite des Fahrzeugs kleiner ist als die Fläche $S_2$ des Landteils in der Richtung von der Reifenäquatorialebene zur Außenseite des Fahrzeugs, oder

(ii) die Umfangsrillen (11, 12) sind auf der Reifenäquatorialebene (C) nicht vorhanden,

wobei, wenn der Reifen am Fahrzeug montiert ist, ein Abstand ($W_2$) von der Reifenäquatorialebene (C) zur Rillenkante der Umfangsrille (11), die einer Innenrichtung eines Fahrzeugs am nächsten liegt, sich von einem Abstand ($W_3$) von der Reifenäquatorialebene (C) zur Rillenkante der Umfangsnut (12), die einer Außenrichtung des Fahrzeugs am nächsten liegt,

wobei, wenn der Reifen am Fahrzeug montiert ist, der Abstand ($W_2$) von der Reifenäquatorialebene (C) zur Rillenkante der dem Fahrzeuginneren am nächsten gelegenen Umfangsrille (11) größer ist als der Abstand ($W_3$) von der Reifenäquatorialebene zur Rillenkante der dem Fahrzeugäußeren am nächsten gelegenen Umfangsrille (12).

2. Reifen nach Anspruch 1, wobei der Laufflächenabschnitt (1) eine dritte Gummischicht (8) umfasst, die in Radialrichtung des Reifens an die Innenseite der zweiten Gummischicht (7) angrenzt.

3. Reifen nach einem der Ansprüche 1 oder 2,

wobei die Menge eines Polymers in der Kautschukzusammensetzung, die die erste Gummischicht (6) bildet, 40 Massenprozent oder weniger beträgt,

wobei die Menge des Polymers in der Kautschukzusammensetzung, die die erste Gummischicht (6) bildet, größer ist als die Menge eines Polymers in der Kautschukzusammensetzung, die die zweite Gummischicht (7) bildet.

4. Reifen nach einem der Ansprüche 1 bis 3, wobei das Verhältnis der Fläche des Landteils (2) in einer Aufstandsfläche 60 bis 80 % beträgt.

5. Reifen nach einem der Ansprüche 1 bis 4, wobei ein Verhältnis von Rillenflächen in den Schulterlandteilen (16, 17) größer ist als ein Verhältnis einer Rillenfläche im mittleren Landteil (20).

6. Reifen nach einem der Ansprüche 1 bis 5, wobei die Länge mindestens eines Landteils der Landteile (16, 17) in Breitenrichtung von außen nach innen in Radialrichtung des Reifens allmählich zunimmt.

7. Reifen nach einem der Ansprüche 1 bis 6, wobei, wenn eine Rillenbreite auf der Lauffläche (10) der Umfangsrillen, die sich an der äußersten Seite befinden, wenn sie an einem Fahrzeug montiert sind, als $L_0$ definiert ist, und eine Rillenbreite bei 95 % der tiefsten Stelle des Rillengrundes der Umfangsrillen, die sich an der äußersten Seite befinden, wenn sie an einem Fahrzeug montiert sind, als $L_{95}$ definiert wird, $L_{95}/L_0$ 0,20 bis 0,80 beträgt.

8. Reifen nach einem der Ansprüche 1 bis 7, wobei mindestens eine der Kautschukzusammensetzung, die die erste Gummischicht bildet, und die Kautschukzusammensetzung, die die zweite Gummischicht (7) bildet, ein Kohlenwasserstoffharz enthält.

9.  Reifen nach einem der Ansprüche 1 bis 8, wobei der komplexe Elastizitätsmodul E*$_T$ der ersten Gummischicht (6) bei 30 °C 4,0 MPa oder mehr beträgt.

10. Reifen nach einem der Ansprüche 1 bis 9, wobei tan $\delta$ der zweiten Gummischicht (7) bei 30 °C 0,25 oder weniger beträgt.

11. Reifen nach einem der Ansprüche 1 bis 10, wobei die Glasübergangstemperatur der ersten Gummischicht (6) -25 °C oder mehr beträgt.

12. Reifen nach einem der Ansprüche 1 bis 11, wobei die Shore-Härte (Hs) der zweiten Gummischicht (7), gemessen bei 23 °C gemäß JIS K 6253-3:2012 unter Verwendung eines Durometers vom Typ A, 50 bis 80 beträgt.

13. Reifen nach einem der Ansprüche 1 bis 12, wobei der Modul der zweiten Gummischicht (7) bei 100 % Dehnung größer ist als der Modul der ersten Gummischicht (6) bei 100 % Dehnung.


## Revendications

1.  Pneumatique comprenant une partie de bande de roulement (1), la partie de bande de roulement comprenant au moins une première couche de caoutchouc (6) formant une surface de bande de roulement (10) et une deuxième couche de caoutchouc (7) adjacente à un côté intérieur de la première couche de caoutchouc (6) dans une direction radiale du pneumatique,

    dans lequel la partie de bande de roulement (1) comprend

    deux rainures circonférentielles ou plus (11, 12, 13, 14) s'étendant de manière continue dans une direction circonférentielle du pneu,
    une paire de parties de bande d'épaulement (16, 17) séparées par les rainures circonférentielles (11, 12, 13, 14) et des extrémités de contact au sol, et
    une partie de bande centrale (20) située entre la paire de parties de bande d'épaulement (16, 17),

    dans lequel la première couche de caoutchouc (6) et la deuxième couche de caoutchouc (7) sont formées d'une composition de caoutchouc comprenant un composant de caoutchouc,
    dans lequel le rapport entre la distance H$_2$, exprimée en mm, entre la surface la plus externe de la partie de bande de roulement (1) et la partie la plus externe de la deuxième couche de caoutchouc (9), et la profondeur H$_1$ des rainures circonférentielles les plus profondes, H$_2$/H$_1$, est compris entre 0,40 et 0,90, et
    dans lequel, lorsque le module d'élasticité complexe à 30 °C de la première couche de caoutchouc est défini comme E*$_T$, exprimé en MPa, et que le module d'élasticité complexe à 30 °C de la deuxième couche de caoutchouc (7) est défini comme E*$_B$, exprimé en MPa , E*$_B$ est supérieur à E*$_T$, et le rapport de E*$_T$ à H$_2$/H$_1$, E*T/(H$_2$/H$_1$ ), est supérieur ou égal à 6,0,
    où le module d'élasticité complexe est mesuré dans des conditions de température de 30 °C, de fréquence de 10 Hz, de déformation initiale de 5 % et de déformation dynamique de 1 %,

    et dans lequel l'une des options (i) ou (ii) est réalisée:

    (i) le rapport entre la surface de la partie de bande (2) dans une surface de contact au sol est asymétrique par rapport au plan équatorial du pneu (C),

    où le rapport entre la surface d'une partie de bande dans une surface de contact au sol fait référence au rapport entre la surface totale des parties de bande de l'épaulement et du centre à la surface totale S de la surface de contact au sol, et
    dans lequel, lorsque le pneu est monté sur le véhicule, l'aire de surface S$_1$ de la partie de bande dans une direction allant du plan équatorial du pneu vers l'intérieur du véhicule est inférieure à l'aire de surface S$_2$ de la partie de bande dans la direction allant du plan équatorial du pneu vers l'extérieur du véhicule, ou

    (ii) les rainures circonférentielles (11, 12) ne sont pas présentes sur le plan équatorial (C) du pneu,

dans lequel, lorsque le pneu est monté sur le véhicule, une distance ($W_2$) entre le plan équatorial du pneu (C) et le bord de la rainure circonférentielle (11) le plus proche de la direction intérieure d'un véhicule est différente d'une distance ($W_3$) entre le plan équatorial du pneu (C) et le bord de la rainure circonférentielle (12) la plus proche de la direction extérieure du véhicule,

dans lequel, lorsque le pneu est monté sur le véhicule, la distance ($W_2$) entre le plan équatorial du pneu (C) et le bord de la rainure circonférentielle (11) située le plus près de l'intérieur du véhicule est supérieure à la distance ($W_3$) entre le plan équatorial du pneu et le bord de la rainure circonférentielle (12) située le plus près de l'extérieur du véhicule.

2.  Pneu selon la revendication 1, la partie de bande de roulement (1) comprenant une troisième couche de caoutchouc (8) adjacente à un côté intérieur de la deuxième couche de caoutchouc (7) dans une direction radiale du pneu.

3.  Pneu selon l'une quelconque des revendications 1 ou 2,

    dans lequel la quantité de polymère dans la composition de caoutchouc formant la première couche de caoutchouc (6) est de 40 % en masse ou moins,
    dans lequel la quantité de polymère dans la composition de caoutchouc formant la première couche de caoutchouc (6) est supérieure à la quantité de polymère dans la composition de caoutchouc formant la deuxième couche de caoutchouc (7).

4.  Pneumatique selon l'une quelconque des revendications 1 à 3, dans lequel le rapport entre la surface de la partie de bande (2) et la surface de contact au sol est compris entre 60 et 80 %.

5.  Pneumatique selon l'une quelconque des revendications 1 à 4, dans lequel le rapport des surfaces des rainures dans les parties de bande d'épaulement (16, 17) est supérieur au rapport de la surface des rainures dans la partie de bande centrale (20).

6.  Pneumatique selon l'une quelconque des revendications 1 à 5, dans lequel la longueur d'au moins une partie de bande parmi les parties de bande (16, 17) dans le sens de la largeur augmente progressivement de l'extérieur vers l'intérieur dans le sens radial du pneumatique.

7.  Pneumatique selon l'une quelconque des revendications 1 à 6, dans lequel, lorsque la largeur de rainure sur la surface de bande de roulement (10) de la rainure circonférentielle située sur le côté le plus extérieur lorsqu'elle est montée sur un véhicule est définie comme $L_0$, et la largeur de rainure à 95 % de la partie la plus profonde du fond de rainure de la rainure circonférentielle située sur le côté le plus extérieur lorsqu'elle est montée sur le véhicule est définie comme $L_{95}$, $L_{95}/L_0$ est comprise entre 0,20 et 0,80.

8.  Pneumatique selon l'une quelconque des revendications 1 à 7, dans lequel au moins l'un parmi la composition de caoutchouc formant la première couche de caoutchouc et la composition de caoutchouc formant la deuxième couche de caoutchouc (7) comprend une résine hydrocarbonée.

9.  Pneumatique selon l'une quelconque des revendications 1 à 8, dans lequel le module d'élasticité complexe $E^*_T$ de la première couche de caoutchouc (6) à 30 °C est de 4,0 MPa ou plus.

10. Pneumatique selon l'une quelconque des revendications 1 à 9, dans lequel tan $\delta$ de la deuxième couche de caoutchouc (7) à 30° C est inférieur ou égal à 0,25.

11. Pneumatique selon l'une quelconque des revendications 1 à 10, dans lequel la température de transition vitreuse de la première couche de caoutchouc (6) est de -25 °C ou plus.

12. Pneumatique selon l'une quelconque des revendications 1 à 11, dans lequel la dureté Shore (Hs) de la deuxième couche de caoutchouc (7) mesurée à 23 °C conformément à la norme JIS K 6253-3:2012 à l'aide d'un duromètre de type A est comprise entre 50 et 80.

13. Pneumatique selon l'une quelconque des revendications 1 à 12, dans lequel le module de la deuxième couche de caoutchouc (7) à un allongement de 100 % est supérieur au module de la première couche de caoutchouc (6) à un allongement de 100 %.

# FIG. 1

# FIG.2

# FIG.3

# FIG. 4

# FIG.5

# FIG.6

**REFERENCES CITED IN THE DESCRIPTION**

**Patent documents cited in the description**

- JP H06156016 A
- EP 3141402 A1
- JP 2020023152 A
- JP 2019142503 A
- JP 2018090131 A